(19) Europäisches Patentamt / European Patent Office / Office européen des brevets

(11) **EP 3 692 696 B1**

(12) **FASCICULE DE BREVET EUROPEEN**

(45) Date de publication et mention
de la délivrance du brevet:
**05.07.2023 Bulletin 2023/27**

(51) Classification Internationale des Brevets (IPC):
**H04L 1/00** *(2006.01)*   **H04L 65/1104** *(2022.01)*
**H04L 65/65** *(2022.01)*

(21) Numéro de dépôt: **18782118.6**

(22) Date de dépôt: **14.09.2018**

(52) Classification Coopérative des Brevets (CPC):
**H04L 1/0006; H04L 1/0014; H04L 1/0023;
H04L 65/1104; H04L 65/65**

(86) Numéro de dépôt international:
**PCT/FR2018/052256**

(87) Numéro de publication internationale:
**WO 2019/068982 (11.04.2019 Gazette 2019/15)**

(54) **SIGNALISATION D'UNE REQUÊTE D'ADAPTATION D'UNE SESSION DE COMMUNICATION EN VOIX SUR IP**

SIGNALISIERUNG EINER ANFRAGE ZUR ANPASSUNG EINER
VOICE-OVER-IP-KOMMUNIKATIONSSITZUNG

SIGNALLING OF A REQUEST TO ADAPT A VOICE-OVER-IP COMMUNICATION SESSION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.10.2017 FR 1759203**

(43) Date de publication de la demande:
**12.08.2020 Bulletin 2020/33**

(73) Titulaire: **Orange
92130 Issy-les-Moulineaux (FR)**

(72) Inventeurs:
• **RAGOT, Stéphane
92326 Châtillon Cedex (FR)**
• **DUFOUR, Jérôme
92326 Châtillon Cedex (FR)**

• **MAJED, Najmeddine
92326 Châtillon Cedex (FR)**

(56) Documents cités:
**US-A1- 2007 183 323    US-A1- 2010 232 297**

• **QUALCOMM INCORPORATED: "eVoLP: MTSI
Adaptation and Capabilities Parameters", 3GPP
DRAFT; S4-170627 EVOLP MTSI ADAPTATION
AND CAPABILITIES PARAMETERS, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX , vol. SA WG4, no. Sophia Antipolis,
France; 20170626 - 20170630 22 juin 2017
(2017-06-22), XP051303879, Extrait de l'Internet:
URL:http://www.3gpp.org/ftp/Meetings_3GPP_
SYNC/SA4/Docs/ [extrait le 2017-06-22]**

**Description**

La présente invention se rapporte au domaine des télécommunications et plus particulièrement des réseaux de communication par paquets. Dans ce type de réseaux, il est possible d'acheminer des flux de données associées à des services temps réel.

Le protocole Internet, appelé IP pour "Internet Protocol", développé par l'IETF, pour "Internet Engineering Task Force", est mis en oeuvre sur les réseaux de communication par paquets aussi bien pour supporter des services non temps-réel tels que des services de transfert de données, de consultation de pages web, de messagerie électroniques, que des services temps réels ou conversationnels, tels que la téléphonie sur IP, la vidéo téléphonie sur IP ou encore la diffusion vidéo sur IP.

L'état de la technique est divulgué par QUALCOMM INCORPORATED: "eVoLP: MTSI Adaptation and Capabilities Parameters",,vol. SA WG4, no. Sophia Antipolis, France; 20170626 - 20170630 22 juin 2017 (2017-06-22), US 2010/232297 et US 2007/183323.

L'invention se rapporte plus particulièrement à une signalisation de requête d'adaptation de codage/décodage de signaux temps réels comme les signaux de voix ou de vidéo lors d'une session de communication temps-réel entre deux terminaux de communication.

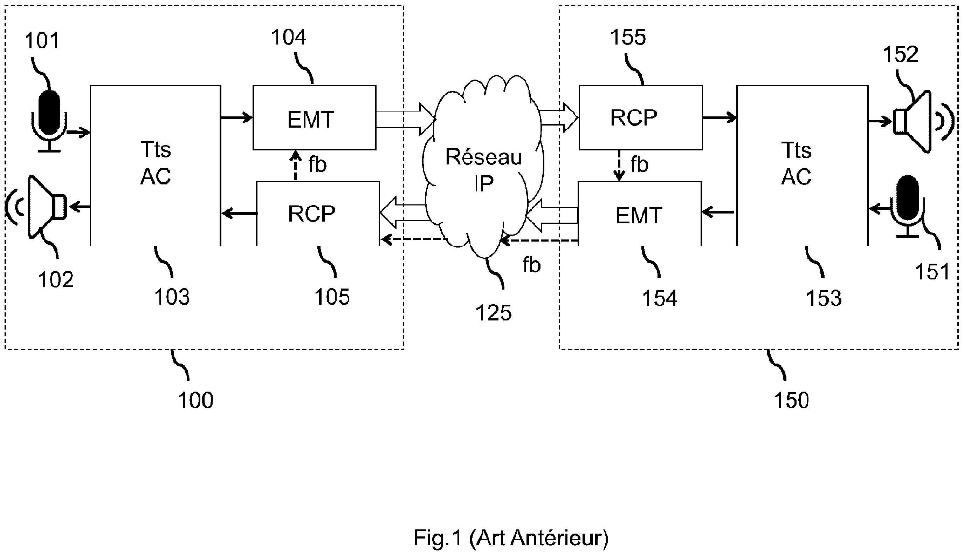

Un exemple de système de communication voix sur IP existant est décrit en référence à la **figure 1.** Cette figure décrit un système de communication bidirectionnelle de voix sur IP (VoIP) avec deux terminaux de téléphonie (100 et 150) reliés par un réseau par paquets de type IP (125). Le "plan de signalisation" n'est pas représenté sur cette figure mais les solutions possibles pour établir et gérer des appels peuvent reposer sur différents protocoles connus comme:

- SIP/SDP (pour « Session Initiation Protocol/Session Description Protocol » en anglais) selon les spécifications IETF RFC 3261 et RFC 4566 - comme dans les services multimédia sur IMS (pour « IP Multimedia SubSystem » en anglais). Pour faciliter les échanges de signalisation sur les capacités média et les offres/réponses associées, il est également possible d'utiliser « SDPcapneg » selon la spécification IETF RFC 5939.
- JSEP (pour « JavaScript Session Establishment Protocol » en anglais) qui utilise la syntaxe de SDP pour définir des descriptions de session WebRTC (avec un échange par WebSocket ou un autre moyen).
- H.323/H.245.

La figure 1 est une vue simplifiée du "plan média" et de la chaîne audio utilisée quand l'appel est établi. On se limite ici au cas d'un signal audio mono, le signal acoustique ambiant est par exemple capté par un microphone (101 et 151) de chaque côté de la communication. On remarquera que le cas d'un signal d'entrée / sortie mono peut facilement se généraliser à un cas multicanal.

Le signal distant est restitué sur un haut-parleur (102 et 152). Les signaux audio captés et restitués subissent en général différents traitements acoustiques en émission et en réception (103 et 153) comme par exemple:

- conversion analogique/numérique, contrôle de gain, réduction de bruit, annulation d'écho, etc..., en émission
- conversion numérique/analogique, contrôle de gain, etc..., en réception.

Le signal audio prétraité en émission est codé par trames successives - avec typiquement une longueur de trame (en général fixe) allant de 10 à 60 ms - et les trames codées sont mises sous forme de paquets IP (104 et 154). Les paquets sont typiquement transportés par le protocole RTP (pour "Real Time Protocol" en anglais), décrit dans la spécification IETF RFC 3550, ce protocole se situe au-dessus des protocoles de transport IP/UDP (pour "User Datagram Protocol" en anglais). On notera que le protocole UDP peut être remplacé par un autre protocole de transport, par exemple par TCP (pour « Transmission Control Protocol » en anglais) pour notamment faciliter la traversée de réseaux avec traduction d'adresse réseau NAT (pour « Network Address Translation « en anglais), proxys ou pare-feux.

En réception (105 et 155), les paquets sont reçus dans un buffer de gigue visant à compenser les variations des temps de réception, et le signal est décodé (en compensant les pertes éventuelles de trames), enfin le signal reconstruit est post-traité (103 et 153) et restitué.

La communication est ici supposée bidirectionnelle et le système de communication forme ainsi un système bouclé avec rétroaction ("feedback"). Le « feedback » peut être transporté de deux façons:

- "Hors bande" (c'est-à-dire contenu dans des paquets qui constituent un flux supplémentaire par rapport au flux média RTP). Typiquement, le protocole RTCP (pour Real-Time Control Protocol) est utilisé comme canal de « feedback ». RTCP permet des transmissions de paquets de contrôle dans des paquets séparés du flux RTP. On rappelle que les paquets RTCP peuvent avoir une taille conséquente et donc résulter en un débit supplémentaire non négligeable; de plus, la perte possible de paquets peut être problématique, car si RTCP est utilisé pour des fins d'adaptation la requête transportée peut être perdue. L'envoi des paquets par le protocole RTCP peut être discontinu et non répétitif, ce qui peut rendre l'adaptation moins réactive et dépendante des conditions réseaux (pertes de paquets, etc.).

- "Dans la bande" (c'est à dire dans le flux média RTP). Ce type de feedback peut être considéré comme plus robuste que RTCP car il est possible de répéter une même requête dans plusieurs paquets successifs (typiquement toutes les 20 ms pour les codées comme AMR, AMR-WB ou EVS considérés plus loin). A noter que dans certaines situations (appel en attente, écoute de messagerie, ...), il est possible que les paquets RTP soient envoyés dans un seul sens, cependant on suppose ici un envoi de paquets RTP bidirectionnel pour que la rétroaction fonctionne.

On rappelle qu'il existe différents profils de protocole RTP, dont les principaux sont AVP (Pour « Audio Video Profile » en anglais) selon la spécification RFC 3551 et AVPF (Pour « Audio Video Profile with Feedback » en anglais) selon la spécification RFC 4585. Sans perte de généralité, on ne revoit pas ici leurs versions intégrant la sécurité (SAVP et SAVPF où le préfixe « S » signifie « Secure » en anglais) car les aspects de sécurité dépassent le cadre de l'invention. Une différence majeure entre AVP et AVPF tient aux contraintes temporelles d'envoi de paquets RTCP: avec AVP on ne peut envoyer un paquet RTCP qu'en moyenne toutes les 5 secondes, ce qui n'est en général pas suffisant pour avoir une adaptation réactive en cas de conditions réseaux très variables. De plus, avec le protocole AVFP on peut utiliser des messages de rétroaction RTCP FB (FB pour « FeedBack ») alors que seuls les paquets RTCP APP (APP pour "Application defined") sont définis dans AVP pour transporter un feedback en dehors des rapports RTCP (SR et RR).

En général, plusieurs types de dégradation peuvent potentiellement affecter la qualité de la voix sur IP:

- bande passante variable / congestion du réseau
- pertes, dé-séquencement, répétition de paquets
- retard, variation du retard de transmission des paquets
- dérive d'horloge entre les terminaux

Ils existent différentes solutions pour pallier ces dégradations différentes, dont des solutions d'adaptation dans les terminaux. On distingue deux types d'adaptation dans les terminaux VoIP: l'adaptation basée émetteur ("sender based" en anglais) et l'adaptation basée récepteur ("receiver based" en anglais).

Pour que l'émetteur puisse s'adapter et décider de son adaptation (adaptation "basée émetteur"), celui-ci doit recevoir un « feedback » du récepteur distant indiquant par exemple le taux de perte observé ou la bande passante disponible estimée par le récepteur distant.

Dans une adaptation "basée récepteur", le « feedback » reçu par l'émetteur local (104) est une décision d'adaptation (par exemple le choix du mode ou débit à utiliser) prise par le récepteur distant (155) - ce feedback est transmis en passant par l'émetteur distant (154) puis le récepteur local (105).

La figure 1 indique ce feedback par des flèches en pointillées pour le sens allant du récepteur 155 à l'émetteur 104. Bien entendu, ce feedback peut se faire dans l'autre sens de la communication, avec un feedback du récepteur 105 vers l'émetteur 154 en passant par les blocs 104 et 155; ce sens inverse n'est pas représenté sur la figure1 pour ne pas alourdir cette figure.

Dans un exemple de solutions d'adaptation, pour contrôler une variation de bande passante ou une congestion du réseau, on peut mettre en oeuvre les techniques décrites ci-dessous.

Lorsqu'un codée fonctionne à un débit fixe, une solution d'adaptation pour modifier le débit effectif sur le réseau consiste à varier le nombre de trames consécutives de signal dans un paquet ("frame bundling" en anglais) et ainsi varier le débit paquet ("packet rate" en anglais) et le débit relatif des entêtes protocolaires IP/UDP/RTP (et des couches inférieures). Lorsque la négociation de l'appel utilise le protocole SDP, la possibilité d'utiliser cette adaptation du débit paquet dépend des paramètres "ptime" et "maxptime" définissant respectivement les longueurs minimum et maximum possibles d'une trame. Par exemple pour ptime=20 et maxptime=240, un paquet représente 20 ms de signal et il est possible de multiplexer jusqu'à 12 trames par paquet.

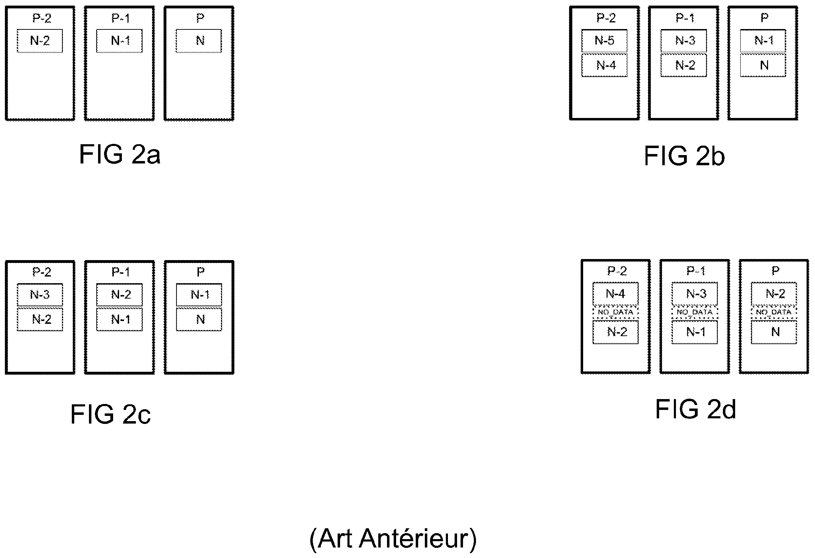

Les **figures 2a à 2d** illustrent des exemples de formats de paquets IP avec l'envoi d'une ou plusieurs trames par paquet. On considère que le mode de génération par défaut de paquets correspond au cas de la figure 2a où la trame courante $N$ est mise dans le paquet $P$, où on peut considérer que $P = N$ dans ce cas. Un exemple de "frame bundling" est donné à la figure 2b où les trames $N$ et $N - 1$ sont mises dans le paquet $P$ - le rythme paquet est donc deux fois moins élevé que le rythme trame et on peut considérer que $P = \lfloor N/2 \rfloor$ ($\lfloor \cdot \rfloor$ représente l'arrondi à l'entier inférieur).

Lorsqu'un codée est multi-débit, on peut également changer le débit du codec. Ce changement de débit peut se faire en fonction de la bande passante disponible estimée par le récepteur distant et reçue par « feedback » (décision "basée émetteur") ou en fonction d'une requête de changement de débit reçue par « feedback » (décision "basée récepteur").

On peut noter qu'il existe également d'autres solutions que l'adaptation du codage pour éviter la congestion - ces solutions alternatives ne fonctionnement pas au niveau RTP ou au niveau de la couche application, mais à plus bas niveau. Elles ne seront pas développées ici car sortant du cadre de l'invention.

On notera enfin que pour les applications non-temps-réel utilisant le protocole TCP (Pour « Transmission Control Protocol » en anglais), une approche classique d'adaptation aux conditions canal consiste à varier le débit TCP, en utilisant un « feedback » où le récepteur envoie une demande de retransmission (ARQ pour « Automatic ReQuest ») avec l'indication des paquets non reçus; le débit TCP est adapté en fonction de ce « feedback ». L'indication de congestion en TCP est à l'origine limitée à l'indication de pertes et elle a été étendue à d'autres paramètres (analyse de l'évolution du temps de transmission aller-retour ou RTT pour « round-trip time » en anglais, etc.).

Pour une dégradation due à une perte de paquets, une approche minimaliste pour gérer ce type de dégradation est d'appliquer une correction de pertes de trame au niveau du récepteur. Cette approche n'est que réactive et ne peut pas toujours très bien "dissimuler" des "trous" (informations manquantes, non reçues) dans le signal décodé, en particulier lorsque plusieurs trames consécutives sont perdues ou si le codée utilisé est sensible aux pertes (par exemple pour un codée prédictif). Il faut également assurer un retour rapide à la normale ("recovery") dans le signal audio; la correction de pertes de trames perdues produit souvent des artéfacts qui sont plus ou moins audibles selon le type de codée et la méthode de correction de pertes utilisée. La correction de pertes peut être mise en oeuvre dans le décodeur audio ou intégrée au récepteur dans les opérations d'adaptation du buffer de gigue (en "allongeant" le signal actuel et en le "fusionnant" avec le signal futur une fois disponible et décodé).

Une meilleure approche pour contrer les pertes de trames est d'utiliser de la redondance en répétant des trames codées entières ou partielles (par exemple, des paramètres codés importants); cette approche a cependant un coût en termes de débit et de retard.

Des exemples d'utilisation de redondance partielle sont données pour les codées IETF OPUS (mode "inbandfec") et 3GPP EVS ("channel-aware mode") connus de l'homme de l'art. Des exemples d'utilisation de redondance complète (ou "application layer redundancy" en anglais) sont données au chapitre 10 de la spécification 3GPP TS 26.114 (version 15.0.0) pour les codées AMR, AMR-WB et EVS. Dans la suite, la "redondance complète" sera résumée en "redondance".

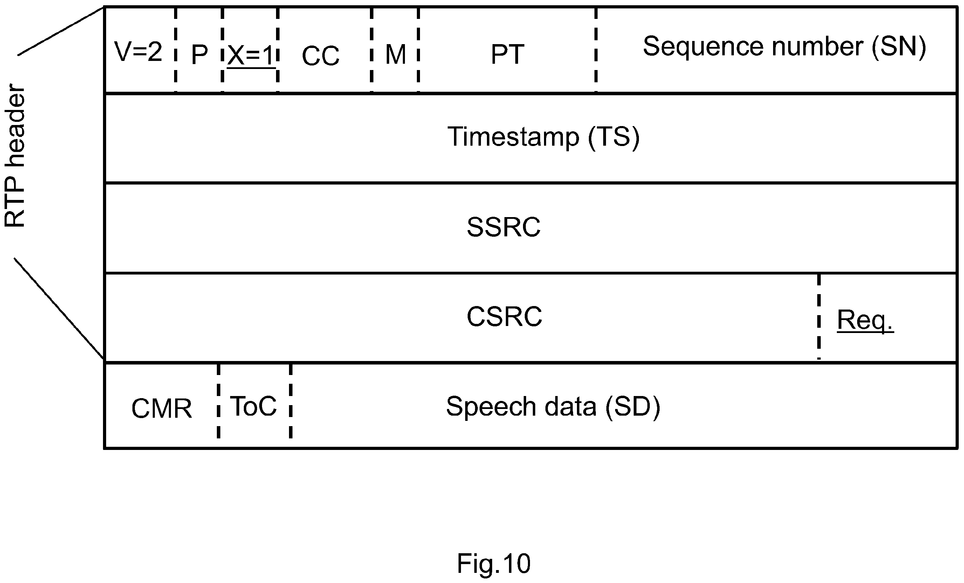

Les figures 2c et 2d illustrent des cas de redondance où la trame codée $N$ est répétée dans un paquet suivant avec une distance appelée "offset" et notée $K$ - pour $K = 1$ représenté à la figure 2c, le paquet $N$ contient la trame $N$ et la trame précédente $N - 1$, tandis que pour $K = 2$ représenté à la figure 2d, le paquet $N$ contient la trame $N$ et la trame $N - 2$ ainsi qu'une trame vide (NO_DATA). Pour un offset $K$ plus grand, le nombre de trames vides (NO_DATA) "insérées" entre la trame courante d'indice $N$ et la trame redondante d'indice $N - K$ est $K - 1$. On notera qu'il est possible de combiner la redondance et l'agrégation de trames, ce cas n'est pas détaillé ici (voir 3GPP TS 26.114 figures 10.12 et 10.13).

Lorsque la négociation de l'appel utilise le protocole SDP, l'utilisation de ce type de redondance au niveau applicatif ("application layer redundancy") dépend du paramètre "max-red" lorsque celui-ci est défini dans le format de transport pour un codée donné. Typiquement le paramètre "max-red" donne la durée maximale (en ms) - à l'émetteur - entre la transmission d'une trame (dite primaire) et la transmission d'une version redondante; ce paramètre permet donc de fixer un retard maximal lorsque la redondance est utilisée. Par exemple "max-red=20" indique qu'il est possible d'utiliser la redondance et qu'une trame redondante peut être transmise jusqu'à 20 ms après la trame originale. En général, quand "max-red" est fixé à 0, cela revient à désactiver l'utilisation de la redondance et si "max-red" n'est pas présent comme paramètre de signalisation (attribut SDP), cela indique qu'aucune limitation n'existe sur l'utilisation de la redondance - dans la limite où la bande passante globale spécifiée par le paramètre SDP « b=AS : » selon l'IETF RFC 4566 et les modes de codage autorisés dans la session sont respectés.

Pour les autres types de dégradation cités, une méthode classique pour absorber la gigue réseau, gérer les dé-séquencements et les répétitions de paquets, et rétablir un flux synchrone consiste à utiliser un buffer de gigue en réception. On distingue les buffers fixes et les buffers adaptatifs. Ces buffers permettent aussi en général de gérer les problèmes de dérive d'horloge. La gestion du buffer de gigue n'est pas revue ici car elle dépasse le cadre de l'invention.

La spécification 3GPP TS 26.114 comme vu précédemment, décrit les méthodes possibles d'adaptation du codage. Pour la voix plusieurs mécanismes y sont décrits pour signaler un « feedback » ou des requêtes d'adaptation:

- l'utilisation de requêtes CMR (Pour « Codec Mode Request » en anglais)
- l'utilisation de paquets RTCP de type RTCP APP (APP pour «APPlication-defined» en anglais)

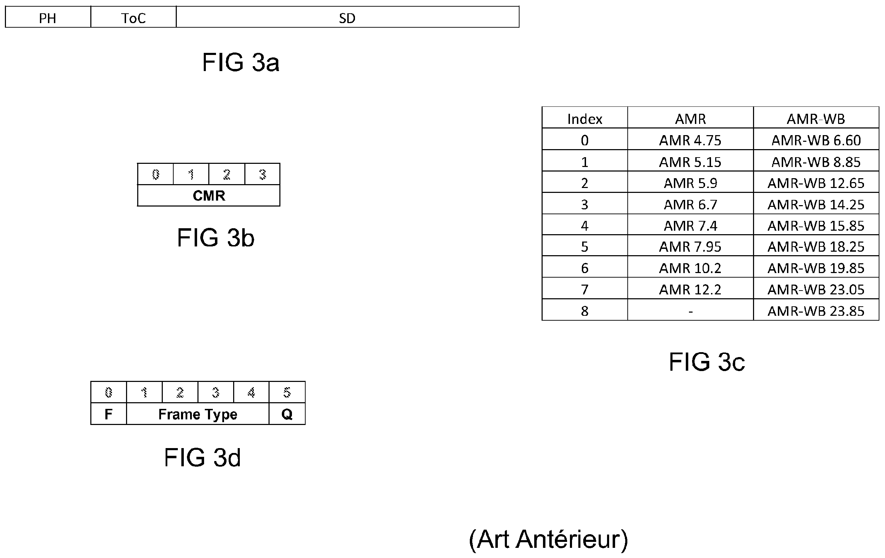

Les **figures 3a à 3d** décrivent le format de transport ("payload format" en anglais) des codées AMR et AMR-WB. La spécification détaillée du « payload » RTP pour AMR et AMR-WB se trouve dans la spécification IETF RFC 4867. On ne décrit ici en détails que le mode appelé "bandwidth-efficient" mais on rappelle qu'il existe aussi un autre mode appelé « octet-aligned ». Dans le mode « octet-aligned » tous les champs de la charge utile (ou « payload » en anglais) - l'entête du payload, les entrées ToC, les données codées - sont alignés individuellement (avec un bourrage de zéros si nécessaire) pour que la longueur (en bits) de ces champs soit un multiple de 8 (donc que ces champs soient sur un nombre entier d'octets) ; dans le mode « bandwidth-efficient » cet alignement à un nombre entier d'octets n'est utilisé que sur le payload complet, donc ce mode peut être vu comme plus efficace car il requiert moins de bourrage de zéros et donc donne des paquets de taille minimale entre les deux formats. Par ailleurs, le mode « octet-aligned » offre plus de fonctionnalités comme la capacité de trier des données codées par robustesse (« robust sorting » en anglais), d'utiliser de l'entrelacement, ou un code CRC sur la trame pour rendre le transport plus robuste aux pertes de trames ou aux erreurs binaires.

Le payload d'un paquet pour AMR et AMR-WB est décrit à la figure 3a: elle comprend un entête PH (pour « Payload Header » en anglais), un champ ToC (pour "Table of Content" en anglais) et les données codées SD (pour « Speech data » en anglais) par AMR ou AMR-WB. Dans le mode "bandwidth efficient", l'entête est simplement un champ de requête de changement de mode de codée CMR (pour « Codec Mode Request » en anglais) sur 4 bits comme indiqué à la figure 3b ; la définition des indices à la figure 3c est dérivée de la table 1a de la spécification 3GPP TS 26.101, intitulée "AMR Speech Codec Frame Structure", version 14.0.0, pour le codée AMR et de la table 1a de la spécification 3GPP TS 26.201 intitulée "AMR Wideband speech codec; Frame Structure", version 14.0.0, pour le codée AMR-WB.

Ces indices définissent des modes de codage différents avec un débit différent respectivement pour le codée AMR et AMR-WB.

Le champ ToC consiste en une liste d'entrée ToC sur 6 bits, où la i-ième entrée représente la i-ième trame contenue dans le paquet courant. Chaque entrée ToC a le format donné à la figure 3d où:

- F (1 bit): F=1 indique que la trame courante est suivie par une autre trame dans le payload; F=0 indique que c'est la dernière trame du paquet.
- FT (4 bits): indice "Frame Type" qui signale que la trame courante est codée par un certain mode AMR or AMR-WB ou qu'il s'agit d'une trame de description de silence (SID) ou d'une trame non transmise (NO_DATA).
- Q (1 bit): indice "Frame quality", si Q=0 la trame est endommagée.

Il est donc possible de transporter plusieurs trames codées en AMR et AMR-WB et le champ ToC permet de les démultiplexer sans ambiguité.

A noter qu'il est possible d'ajouter un bourrage de bits (des octets de "padding") à la fin du payload. Dans ce cas le bit "P" '(pour "Padding") dans l'entête RTP peut être - de façon optionnelle - mis à 1 et les bits supplémentaires doivent être ajoutés comme spécifié dans le RFC 3550 ; le dernier octet de ce "padding" contient le nombre d'octets ajoutés à la fin du payload (incluant ce dernier octet).

Le codée 3GPP EVS utilise un codage multi-modes. Ce codée EVS (pour « Enhanced Voice Services » en anglais) a été normalisé fin 2014. Il est actuellement défini dans deux versions de codes sources:

- Code source en virgule fixe (3GPP TS 26.442)
- Code source en virgule flottante (3GPP TS 26.443)

Le signal d'entrée du codée EVS est échantillonné à la fréquence de 8, 16, 32 ou 48 kHz et le codée peut représenter des bandes audio téléphoniques (narrowband, NB), élargie (wideband, WB), super-élargie (super-wideband, SWB) ou pleine bande (fullband, FB). Les débits du codée EVS sont divisés en deux modes:

   ◦ "EVS Primary" qui comprend

      ◦ Des modes de codage à débit fixe: 7.2, 8, 9.6, 13.2, 16.4, 24.4, 32, 48, 64, 96, 128 kbit/s
      ◦ Un mode de codage à débit variable (VBR) avec un débit moyen proche de 5.9 kbit/s pour la parole active et qui utilise en fait une combinaison de modes de codage à 2.8, 7.2 et 8 kbit/s
      ◦ Un mode "channel-aware" (CAM) à 13.2 kbit/s en WB et SWB uniquement (qui utilise une forme de redondance partielle pour améliorer la robustesse aux pertes de trame)

   ◦ "EVS AMR-WB IO" dont les débits sont identiques au codée 3GPP AMR-WB (9 modes de 6.6 à 23.85 kbit/s)

A cela s'ajoute le mode de transmission discontinue (DTX) dans lequel les trames détectées comme inactives sont remplacées par des trames SID (SID Primary ou SID AMR-WB IO) qui sont transmises de façon intermittente, en moyenne une fois toutes les 8 trames. Les détails algorithmiques du codée EVS sont fournis dans les spécifications 3GPP TS 26.441 à 26.450 et ils ne sont donc pas repris ici.

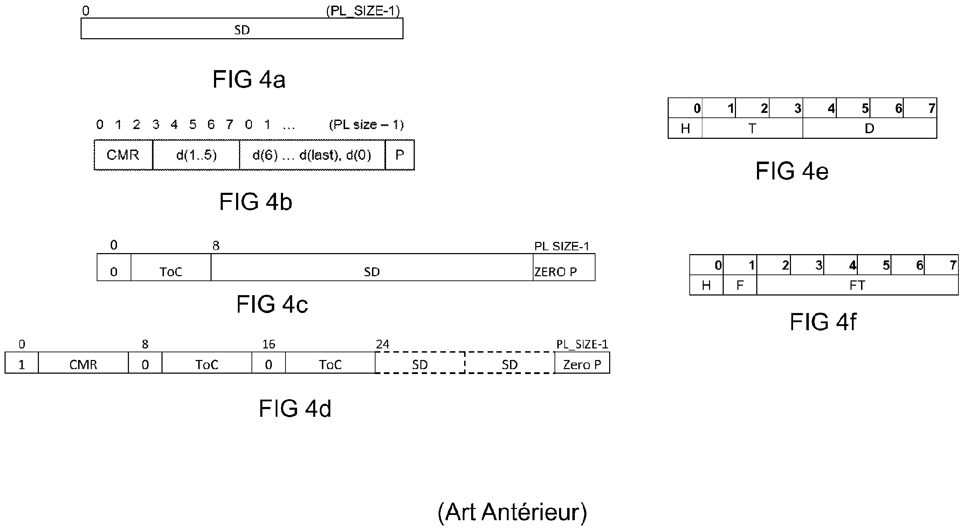

Le format de transport pour transporter sur protocole RTP des données codées par EVS est défini à l'annexe A de la spécification TS 26.445. Ce format est illustré aux **figures 4a à 4g.**

Il existe deux modes différents pour former des paquets EVS:

- Le mode par défaut: les paquets sont soit au format "Compact", soit au format "Header-full", pour éviter des conflits de taille entre ces deux modes, la priorité est donnée au mode Compact dont les tailles sont "protégées", tandis que les tailles du mode "Header-full" sont pénalisées en ajoutant un bourrage de zéros (zéro padding) en cas de conflit avec une taille du mode "Compact".
- Le mode "Header-full"

Des exemples de charge utile RTP au format "Compact" sont données aux figures 4a et 4b pour les cas EVS Primary et EVS AMR-WB IO, respectivement; on observe en particulier que pour EVS Primary la charge utile se résume aux données codées, sans aucune entête de transport et sans aucune possibilité de signaler une requête d'adaptation (Fig. 4a); pour EVS AMR-WB IO, les données codées en mode "Compact" sont réorganisés (certains bits sont permutés) et un CMR réduit à 3 bits est défini comme entête (Fig. 4b). Ce cas particulier de CMR sur 3 bits n'est pas détaillé ici car il n'y a aucun code CMR libre dans cet espace de signalisation réduit à 3 bits, donc aucune possibilité de signaler une requête autre qu'un changement de débit sur 3 bits.

Des exemples de charge utile RTP au format "header-full" sont donnés aux figures 4c et 4d. Dans le premier cas (Fig. 4c), une seule trame est transportée et un octet (8 bits) d'entête ToC est inséré. Dans le second cas (Fig. 4d), deux trames sont transportées dans le même paquet avec 2 entêtes ToC (2 octets) et un champ CMR (1 octet) est également utilisé. En comparaison avec le format de payload des codées AMR et AMR-WB on peut donc observer que le format de payload "Header-full" du codée EVS reprend les concepts de CMR et ToC mais ces champs sont définis sur des octets (8 bits), donc naturellement "octet aligned" dans le mode "Header-full", le premier bit (MSB) étant à 1 pour CMR et 0 pour ToC.

Une définition de ces champs est donnée dans la spécification TS 26.445, Annexe A. Par souci de concision on ne reprend pas ici tous les détails de la spécification TS 26.445, Annexe A.

Le champ CMR sur 8 bits est divisé en trois parties:

- H (1 bit) : toujours à 1
- T (3 bits): bits indiquant le type de requête pour distinguer les différents modes EVS Primary en NB, WB, SWB, FB (dont les modes VBR, CAM) et EVS AMR-WB IO.
- D (4 bits): requête CMR

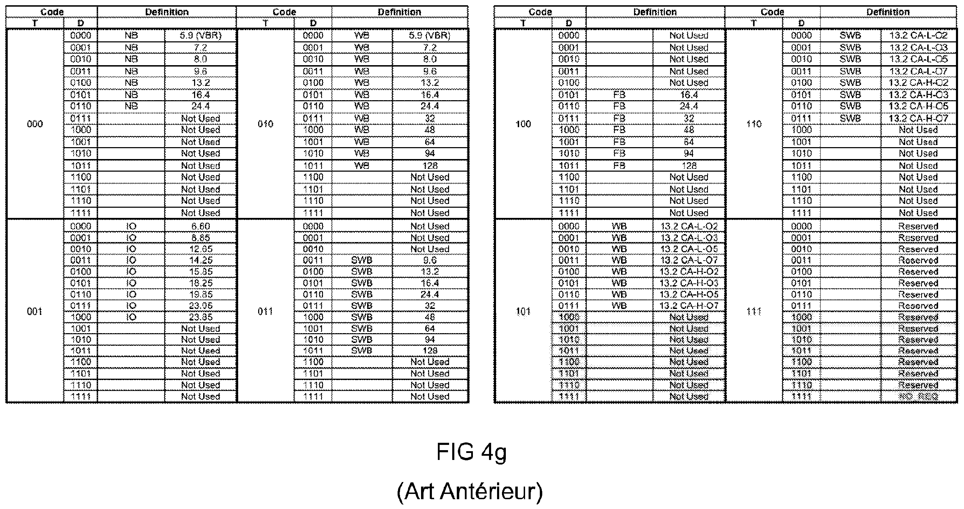

Les valeurs possibles du champ CMR sont définies dans la spécification TS 26.445, Annexe A et définissent les différents modes que peut prendre le codec. Elles sont rappelées à la figure 4g. Certains codes ne sont pas utilisés.

De façon similaire le champ ToC sur 8 bits est divisé en 3 parties:

- H (1 bit): toujours à 0
- F (1 bit): Si F=1, une autre trame suit la trame courante, si F=0, il s'agit de la dernière trame du paquet.
- FT (6 bits): bits indiquant le "Frame type" soit EVS Primary ou EVS AMR-WB IO (incluant le mode SID). Ce champ est lui-même divisé en 3 parties: EVS mode (1 bit), Unused/Q bit (1 bit) selon le bit de mode EVS, et débit EVS (4 bits).

A noter que pour EVS il est également possible d'ajouter un bourrage de bits (des octets de "padding") à la fin du payload. Dans ce cas le bit "P" '(pour "Padding") dans l'entête RTP peut être - de façon optionnelle - mis à 1 et les bits supplémentaires doivent être ajoutés comme spécifié dans le RFC 3550 ; le dernier octet de ce "padding" contient le nombre d'octets ajoutés à la fin du payload (incluant ce dernier octet).

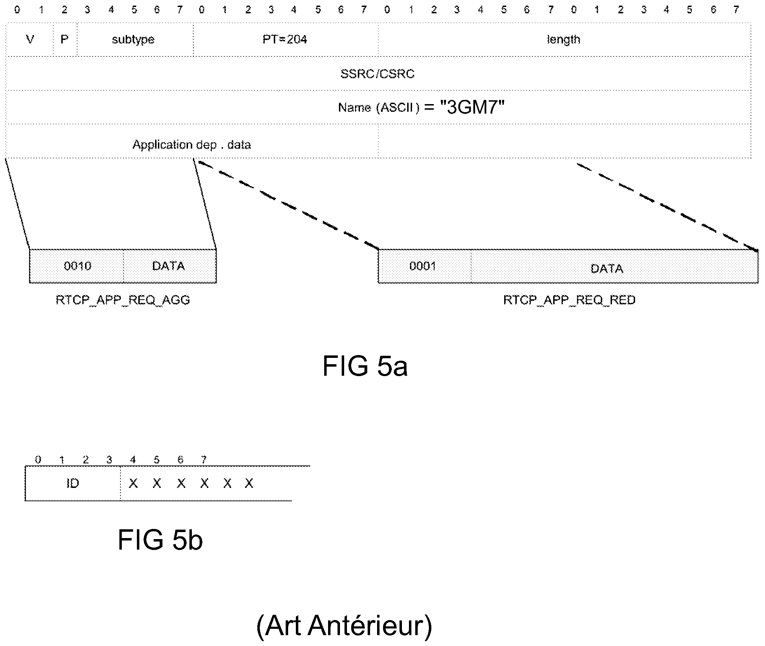

L'utilisation de RTCP APP pour la voix sur IMS est détaillée dans le chapitre 10 de la spécification 3GPP TS 26.114. Le format d'un paquet RTCP APP est illustré à la **figure 5a.** On ne revoit pas ici la signification des champs de l'entête RTCP (V, P, PT, length, SSRC/CSRC). Le champ « Name » est par convention fixé à "3GM7" pour « 3GPP MTSI Release 7 ». La partie utile concerne les données ajoutées dans le champ "Application dépendent data". Cette partie contient un champ d'identification de requête (ID) suivi par des données (Figure 5b). Plusieurs valeurs d'ID (sur 4 bits) sont spécifiées dans TS 26.114.

Certaines valeurs d'ID s'appliquent à tous les codecs:

- ID = 0 0 0 0: Padding (bourrage de zéros)
- ID = 0 0 0 1: Requête d'activation de redondance ("RedReq") - dans ce cas les données suivant l'ID sont sur 12 bits, et chaque bit (i=1 à 12 en partant de la fin) indique s'il faut répéter le paquet N-i (si le bit est à 1) ou non (si le bit est à 0).
- ID = 0 0 1 0: requête d'agrégation ("FrameAggReq") - dans ce cas les données suivant l'ID sont sur 4 bits, et seulement 4 valeurs (parmi 16 possibles) sont pré-définies correspondant à la transmission de 1 à 4 trames par paquets

D'autres valeurs s'appliquent à des codées spécifiques:

- ID = 0 0 1 1: requête CMR pour changer de mode (débit de codage) pour AMR et AMR-WB ("AmrCmr")
- ID = 0 1 0 0: requête de changement de mode pour EVS (EVS Primary)
- ID = 0 1 0 1: requête de changement de bande audio codée pour EVS -NB, WB, SWB ou FB ("EvsBandwidthReq")
- ID = 0 1 1 0: requête pour activer le mode channel-aware (CAM) d'EVS ("EvsParRedReq")
- ID = 0 1 1 1: requête pour basculer de EVS Primary à EVS AMR-WB IO ("EvsIoModeReq")
- ID = 1 0 0 0: requête pour basculer de EVS AMR-WB IO vers EVS Primary ("EvsPrimaryModeReq")

On notera qu'il est possible de combiner plusieurs requêtes RTCP APP dans un même paquet RTCP APP (par exemple une requête d'activation de redondance et une requête d'agrégation).

Ainsi, les requêtes d'adaptation actuelles permises par le champ CMR dans des paquets RTP pour les codées AMR, AMR-WB et EVS ne sont pas suffisants pour effectuer tout type d'adaptation. En particulier, le CMR est limité à des changements de débit commandés par le récepteur, pour les codées AMR et AMR-WB, et des changements de débit, de bande audio codée et de contrôle de mode CAM pour le codée EVS.

La requête par le récepteur d'une autre forme d'adaptation que celles permises par CMR, comme la redondance ou l'agrégation de trames, requiert l'utilisation de RTCP APP dans les applications de voix sur IMS (comme spécifiées dans la spécification TS 26.114). Or RTCP APP, pour être utilisable, requiert le profil AVPF.

Les applications de téléphonie actuelles de type VoLTE (pour « Voice over LTE (Long Term Evolution) » en anglais désignant une technique de transport de la voix sur les réseaux de téléphonie mobile 4G LTE spécifiée dans GSMA IR.92 et de type VoWifi (pour « Voice over Wi-Fi » en anglais) désignant une technique de transport de la voix sur le réseau Wi-Fi spécifiée dans GSMA IR.65, sont basées sur le profil minimaliste de voix sur IMS, où le profil AVPF n'est pas autorisé pour la voix ; seul le profil RTP AVP est autorisé. Ceci implique que les paquets RTCP de type RTCP APP (ou RTCP FB) ne peuvent pas être utilisés dans ces applications.

Quand le profil AVP est autorisé et en fonction des limitations de débit (champs SR et RR en SDP), l'usage réel de RTCP est limité au mieux à l'envoi de rapports "basiques" de type Sender Report (SR) et/ou Receiver Report (RR) qui ont en particulier une fonctionnalité réseau d'envoi de message de maintien de connexion active ("keep-alive" en anglais). L'adaptation de "type émetteur" est donc fortement contrainte par le fait que le « feedback » du récepteur par RTP n'est pas assez régulier et limité à quelques indicateurs de qualité « basiques ».

Il existe ainsi un besoin d'une méthode qui permette au récepteur de commander dans la bande (dans un flux RTP) différents types d'adaptation, de façon réactive et robuste, pour tout type de codées audio ou vidéo.

La présente invention vient améliorer la situation.

Elle propose à cet effet, un procédé de signalisation d'une requête d'adaptation de codage/décodage de signaux temps réels d'une session de communication temps réel, de la part d'un dispositif récepteur vers un dispositif émetteur. La requête d'adaptation est telle qu'elle concerne une demande d'agrégation et/ou de redondance de trames, qu'elle est générée selon l'existence d'un paramètre de signalisation issue de la phase de négociation de codées utilisés lors de l'initialisation de la session de communication et qu'elle est transportée via un protocole temps réel de type RTP.

Ainsi, l'utilisation du protocole RTP pour demander une adaptation permet d'avoir une adaptation réactive contrairement à l'envoi de paquets RTCP qui n'est pas effectué en temps réel.

Les demandes d'adaptation concernent des adaptations différentes que les changements de mode de codage existant dans l'art antérieur. Cette signalisation de requête permet donc d'étendre les possibilités d'adaptations réactives.

Les différents modes particuliers de réalisation mentionnés ci-après peuvent être ajoutés indépendamment ou en combinaison les uns avec les autres, aux étapes du procédé de signalisation défini ci-dessus.

Dans un premier mode de réalisation, un champ inclus dans une requête de changement de mode de type CMR est utilisé pour transporter la requête d'adaptation de la session de communication.

Ce type de transport de requête a l'avantage de ne pas augmenter la taille des paquets IP. Il permet d'utiliser des valeurs de CMR non encore utilisées dans les méthodes de l'état de l'art, pour spécifier d'autres types d'adaptation.

Dans un mode de réalisation particulier où les dispositifs émetteurs et récepteurs utilisent des codeurs/décodeurs de type AMR ou AMR-WB, les codes CMR 9 à 14 sont utilisés pour coder des requêtes d'agrégation et de redondance de différents débits.

Ces codes sont réservés pour des utilisations futures et peuvent de façon avantageuse définir des adaptations de type agrégation ou redondance.

Dans un mode de réalisation particulier où les dispositifs émetteurs et récepteurs utilisent des codeurs/décodeurs de type EVS, les valeurs de code CMR avec T = "111" et D, autre que "1111", sont utilisés pour coder des requêtes de redondance de différents débits.

Ces codes sont réservés pour des utilisations futures et peuvent de façon avantageuse définir des adaptations de type agrégation ou redondance.

Dans un deuxième mode de réalisation, un champ de la requête de remplissage de fin de signalisation du protocole RTP est utilisé pour transporter la requête d'adaptation de la session de communication.

Ce type de transport de requête a également l'avantage de permettre à la fois de demander une adaptation de demande d'agrégation et/ou de redondance et de demander une adaptation de mode de codage. L'utilisation d'un champ de remplissage de fin de signalisation devient alors utile pour spécifier un autre type d'adaptation.

La présente invention vise également un dispositif récepteur transmettant une signalisation d'une requête d'adaptation de codage/décodage de signaux temps réels d'une session de communication temps réel, vers un dispositif émetteur distant Ce dispositif est tel qu'il comporte :

- un module de vérification de l'existence d'un paramètre de signalisation issue de la phase de négociation de codées utilisés lors de l'initialisation de la session de communication ;
- un module d'adaptation apte à déterminer une requête d'adaptation concernant une demande d'agrégation et/ou de redondance de trames et ;
- un module d'insertion de la requête dans un format de transport via un protocole temps réel de type RTP.

Ce dispositif présente les mêmes avantages que le procédé décrit précédemment, qu'il met en oeuvre.

L'invention vise également un terminal de communication comportant un dispositif récepteur tel que décrit.

Elle vise un programme informatique comportant des instructions de code pour la mise en oeuvre des étapes du procédé de signalisation tel que décrit, lorsque ces instructions sont exécutées par un processeur.

Enfin l'invention se rapporte à un support de stockage, lisible par un processeur, intégré ou non au dispositif récepteur, éventuellement amovible, mémorisant un programme informatique mettant en oeuvre un procédé de signalisation tel que décrit précédemment.

D'autres caractéristiques et avantages de l'invention apparaîtront plus clairement à la lecture de la description suivante, donnée uniquement à titre d'exemple non limitatif, et faite en référence aux dessins annexés, sur lesquels :

- la figure 1 illustre un système de communication de voix sur IP connu de l'état de l'art et décrit précédemment ;
- les figures 2a à 2d illustrent des exemples de l'état de l'art, de formats de paquets IP en cas d'agrégation de trames ou de redondance, tel que décrit précédemment ;
- les figures 3a à 3d illustrent le format de transport pour les codées AMR et AMR-WB;
- les figures 4a à 4g illustrent le format de transport pour le codée EVS ;
- les figures 5a à 5b illustrent des exemples de l'état de l'art, de formats de paquets de type RTCP APP tels que décrits précédemment ;
- la figure 6 illustre un mode de réalisation d'un système de communication voix sur IP et d'un procédé de signalisation selon l'invention ;
- la figure 7 illustre un mode de réalisation plus détaillé d'un système de communication voix sur IP selon l'invention ;
- la figure 8 illustre un format de transport utilisé selon un premier mode de réalisation de l'invention pour transporter une requête d'adaptation ;
- la figure 9 illustre un format de transport utilisé selon un deuxième mode de réalisation de l'invention pour transporter une requête d'adaptation ;
- la figure 10 illustre un format de transport utilisé selon un autre mode de réalisation de l'invention pour transporter une requête d'adaptation ; et
- la figure 11 illustre un mode de réalisation matérielle d'un terminal comportant un dispositif récepteur mettant en oeuvre le procédé de signalisation selon un mode de réalisation.

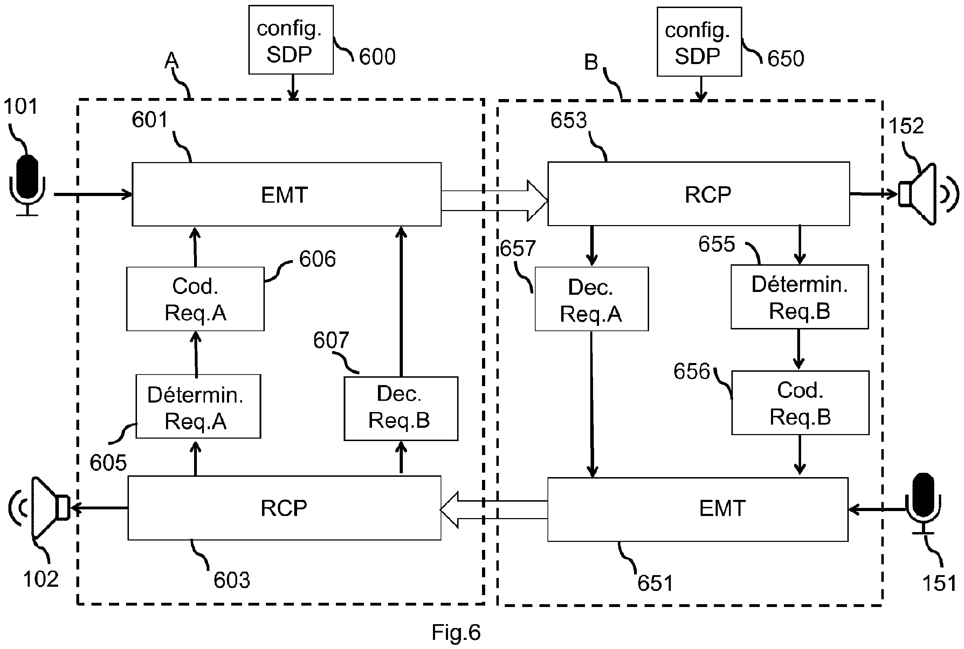

La **figure 6** illustre un exemple de système de communication bidirectionnel entre deux terminaux A et B, mettant en oeuvre un procédé de signalisation de requête selon un mode de réalisation de l'invention. On retrouve comme à la figure 1 les micros et haut-parleurs (101, 151, 102, 152). La figure ne représente pas ici les traitements acoustiques ni le réseau reliant les deux terminaux, par souci de concision et de clarté.

Le terminal A comporte un émetteur 601 et un récepteur 603 tandis que le terminal B comporte un émetteur 651 et un récepteur 653. Les deux terminaux A et B sont typiquement configurés en fonction d'un échange d'offre(s)/réponse(s) selon le protocole SDP, via les blocs respectifs 600 et 650. Typiquement cette configuration SDP sert au moins lors de l'instanciation (initialisation ou ré-initialisation) de l'émetteur et du récepteur; dans des variantes de l'invention on pourra considérer que cette configuration est interne au terminal et permet de configurer l'offre SDP du terminal et sa réponse. Dans des variantes de l'invention d'autres protocoles de signalisation de capacités/configurations média (descriptions de session) équivalents ou dérivés de SDP pourront être utilisés de façon équivalente.

Les émetteurs ont des fonctions de codage, de génération de paquets RTP en rajoutant les entêtes protocolaires et en formant un payload correspondant au format de codage et à l'adaptation éventuelle du transport (agrégation, redondance ou autre) ainsi qu'une fonction de transmission des paquets.

Les récepteurs ont des fonctions de réception des paquets RTP, d'extraction des champs de l'entête RTP, de décodage du payload qui peut inclure la gestion de buffer de gigue, le décodage de trames reçues et la correction de pertes de trames perdues.

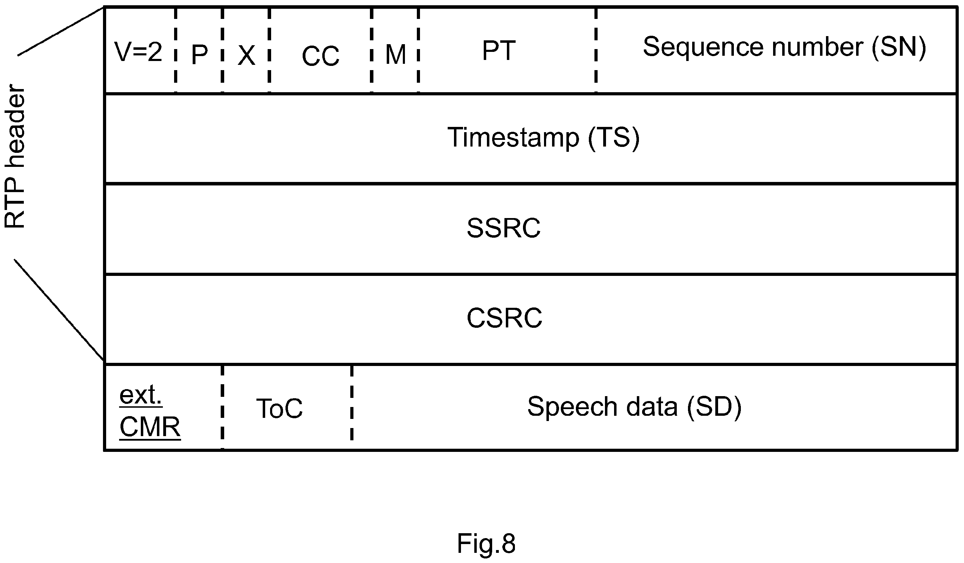

Les terminaux A et B comportent un bloc de décodage de requête (blocs 607 et 657). Différents modes de réalisation d'extraction et de décodage de ces requêtes d'adaptation seront décrits ultérieurement en référence aux figures 8 à 10. Le bloc 607 ou 657 consiste à lire la partie concernée du paquet associé au codée (AMR, AMR-WB ou EVS). On suppose ici que le résultat du décodage de requête par les blocs 607 et 657 est mémorisé dans un élément mémoire "adaptation_info" contenant une structure partagée avec la partie émission (blocs 601 et 651) et cet élément "adaptation_info" comprend lui-même un élément mémorisé "adaptation_info.updated" qui vaut 1 quand une requête (CMR ou autre) a été reçue et 0 sinon. Le bloc 601 ou 651 vérifie, avant de coder chaque nouvelle trame, si la valeur de "adaptation info.updated" est à 1 et si c'est le cas il configure le codage et éventuellement le transport (redondance, agrégation) selon les modes de réalisation de l'invention, en fonction d'éléments complémentaires (par exemple "adaptation_info.requested_bitrate" pour le débit demandé, ou "adaptation_info.red" pour l'activation ou non de la redondance, etc.) issus de la requête reçue et décodée par le bloc 607 ou 657.

Les terminaux A et B comportent un bloc d'adaptation, respectivement 605 et 655, mettant en oeuvre une étape de détermination d'une adaptation à réaliser par l'émetteur distant.

Les terminaux A et B comportent également un bloc de codage de requête, respectivement 606 et 656, mettant en oeuvre une étape de codage d'une adaptation à réaliser par l'émetteur distant. Comme pour le bloc de décodage de requête, le résultat du codage de l'adaptation à réaliser par l'émetteur distant issu des blocs 605 ou 655 est mémorisé dans un élément de mémoire appelé « cmr_request » contenant une structure partagée avec la partie émission (blocs 601 et 651).

Dans un mode de réalisation de l'invention, les terminaux A et B sont configurés (blocs 600 et 650) en fonction de l'existence ou non d'un paramètre de signalisation SDP appelé dans un premier mode de réalisation « adapt_red » (par l'intermédiaire d'un bloc 600 ou 650 de lecture de signalisation SDP) issue de la phase de négociation ou de configuration de codées utilisés lors de l'initialisation (ou de la ré-initialisation) de la session de communication. Le nom "adapt_red" fait ici référence à la redondance (au sens d' "application-layer redundancy") et comme on le verra plus loin d'autres noms sont possibles et sont utilisés dans des variantes, sans changer la nature de l'invention. Les configurations négociées dans les blocs 600 et 650 sont mémorisées dans des éléments mémoires (non représentés sur la figure) qui contiennent une structure partagée entre l'émetteur et le récepteur de chaque terminal A et B.

Les blocs de configuration 600 et 650 vérifient dans un premier temps la condition pour utiliser une requête étendue, qui est ici l'existence d'un paramètre de signalisation SDP appelé « adapt_red ».

On considère que les blocs 601, 603, 605, 606, 607 dans le terminal A et blocs 651, 653, 655, 656, 657 dans le terminal B ont accès à un élément mémoire qui peut être commun à l'émission (601 et 606 pour l'exemple du terminal A) et à la réception (603, 605, 607 pour l'exemple du terminal A) ou bien séparé entre émission et réception. Cet élément est ici appelé "adapt_enabled" mémorisant si le paramètre de signalisation SDP "adapt_red" a été défini ou non lors de l'initialisation du récepteur (bloc 600 et 650 respectivement) incluant les blocs 603, 605 et 607 dans le terminal A et les blocs 653, 655 et 657 dans le terminal B. On considère ici que adapt_enabled =0 si le paramètre " adapt_red" n'est pas présent et 1 s'il est présent.

Comme expliqué ci-dessus, la présence du paramètre de signalisation autorise un type de requête d'adaptation étendue. On notera qu'il est aussi possible que le paramètre de signalisation soit complété par un ou plusieurs paramètres complémentaires, comme par exemple un paramètre « red-offset » qui permet d'indiquer l'offset à utiliser en cas de redondance 100% (ou les offsets à utiliser en cas de redondance à 200% ou plus). Dans un mode de réalisation, un autre élément mémoire appelé "red_offset" est également accessible à tous les blocs d'un terminal A ou B et celui-ci permet de configurer l'intervalle entre les trames primaires et les trames redondantes, en fonction de la configuration SDP (blocs 600 et 650).

On donne en **Annexe 1** un exemple d'offre SDP classique en voix sur IMS.

Ce premier exemple traite d'une offre SDP qui permet d'initier un appel audio avec l'un des codées voix suivants : AMR, AMR-WB et EVS. Le port UDP, le profil AVP et le type du payload (PT) sont indiqués dans la ligne média « m ». Les numéros de type de payload sont PT=97, PT=98 ou 99, PT= 100 ou 101 pour EVS, AMR-WB et AMR respectivement.

La bande passante maximale du média offert dans la partie « b=AS » peut être modifiée selon les besoins et ici elle correspond au débit maximal supporté par EVS qui est 24.4kbit/s sur IPv4.

Les parties « rtpmap » et « fmtp » indiquent les paramètres du format du media. La fréquence de l'horloge RTP pour les codées listés est de 16kHz pour EVS et AMR-WB et de 8kHz pour AMR. Le paramètre « mode-change-capability » négocie la fréquence de changement de mode, il est ici fixé à 2 ce qui indique un changement toutes les 2 trames pour assurer une interopérabilité maximale avec les systèmes de type GSM. Concernant le paramètre « max-red » à 220, celui-ci permet d'utiliser l'intervalle maximal de 220 ms entre la trame originale et la trame redondante).

On donne en **Annexe 2,** un deuxième exemple d'offre SDP, selon un mode de réalisation de l'invention, où l'on a ajouté un paramètre d'adaptation global à tous les codées audio, qui indique la capacité d'utiliser un champ CMR étendu ou un autre type de requête (padding ou extension d'entête RTP) que l'on va décrire ultérieurement, pour le cas de la redondance.

En effet, pour que l'émetteur distant puisse mettre en oeuvre l'adaptation décodée par le récepteur, il faut qu'il comprenne la requête d'adaptation qui va lui être transmise. La signalisation SDP issue de la négociation de codée lors de l'initialisation de la session de communication définie ce type de capacité pour les codées des terminaux respectifs.

Dans le cas où un terminal selon l'invention a la capacité de s'adapter avec un CMR étendu pour commander un changement de type agrégation, redondance de trames ou un autre type d'adaptation spécifique à l'application, la signalisation SDP comprend un paramètre défini « adapt_red » (ou un autre nom dans des variantes) qui indique que le terminal sait utiliser un type de requête étendu qui est dans le mode de réalisation principal le champ CMR de façon étendu en utilisant les codes CMR « reserved » et/ou « not used » d'une façon prédéfinie.

Comme expliqué plus loin, selon l'invention la valeur du champ « b=AS : » pourra être modifié lorsque le paramètre SDP indiquant une capacité d'adaptation étendue « adapt_red» est présent, de sorte qu'il soit possible d'utiliser une redondance 100% efficace. Ainsi pour supporter une redondance à 100% avec EVS avec un mode à 13.2 kbit/s et un offset $K$ il faudra typiquement doubler la valeur de « b=AS: » définie pour 13.2 kbit/s quand une seule trame est transportée (30 pour IPv4) et ajouter le nombre d'octets pour indiquer NO_DATA (soit $K$ - 1 octets de ToC) ; pour $K$ = 2 on aura donc b=AS :61.

Cependant, dans l'exemple ci-dessus on considère que le champ « b=AS : » reste défini par rapport au débit nécessaire pour transporter une seule trame par paquet au débit maximal autorisé parmi tous les codées listés.

Dans des variantes de réalisation, le paramètre SDP "adapt_red" pourra être dans la partie "fmtp", donc spécifique à chaque codec.

On donne en **Annexe 3,** un troisième exemple d'offre SDP, selon un mode de réalisation de l'invention, où l'on a ajouté un paramètre d'adaptation global à tous les codées audio, qui indique la capacité d'utiliser un champ CMR étendu ou un autre type de requête (padding ou extension d'entête RTP) que l'on va décrire ultérieurement, pour le cas plus général de la redondance et de l'agrégation.

Le paramètre de signalisation est cette fois-ci appelé « ext_adapt » et deux paramètres complémentaires sont :

- un paramètre « red-offset » précisant deux valeurs, la première donnant l'offset à utiliser en cas de la redondance 100%, la seconde indiquant qu'il est aussi possible de signaler (et utiliser) une redondance 200% avec l'offset correspondant pour la seconde trame redondante dans un paquet
- un paramètre « agg » précisant le type d'agrégation autorisé, précisé comme une liste, ici le singleton « 1 » indique que seule une trame peut être transportée par paquet.

Dans d'autres variantes, on pourra adopter d'autres syntaxes de signalisation, par exemple on pourra utiliser le paramètre de signalisation comme indicateur principal de la capacité à utiliser des requêtes d'adaptation étendues, et ensuite des paramètres supplémentaires différents pour activer ou non l'utilisation de requêtes spécifiques (redondance, agrégation ou autre).

Dans des variantes de réalisation, le paramètre SDP "adapt_ext" pourra être dans la partie "fmtp", donc spécifique à chaque codec.

Dans un mode de réalisation de l'invention, les blocs 605 et 655 sont exécutés à chaque réception d'un nouveau paquet RTP par les blocs 603 et 653, respectivement. Le récepteur fournit au moins les informations suivantes:

- le temps de réception du paquet RTP (en ms ou selon l'horloge RTP du media)
- la taille du paquet RTP (en octets)
- les informations issues de l'entête RTP:

    ◦ le numéro de séquence RTP
    ◦ le temps d'émission ou "timestamp" RTP

A partir de ces informations, les blocs 603 et 653 peuvent estimer les indicateurs suivants:

- Taux de perte $\tau$ sur un horizon pré-déterminé (par exemple environ sur les 5 dernières secondes). Un exemple de réalisation est donné à l'annexe A.3 de la RFC 3550 où la quantité « fraction » est calculée pour les rapports RTCP SR/RR. Dans des variantes, d'autres méthodes d'estimation seront utilisées.
- Bande passante disponible $\beta$ estimée en kbit/s au niveau IP. Différentes méthodes d'estimation existent, on prend ici l'exemple de l'estimation basée sur un filtre de Kalman donné dans l'article de G. Carlucci et al., «Analysis and Design of the Google Congestion Control for Web Real-time Communication (WebRTC) », Proc. MMSys, May 2016. On considère ici que la bande passante estimée est de la forme : $\beta = \beta_0 + \beta_{codec}$, où $\beta_{codec}$ est le débit du codée (mode de codage) et $\beta_0 = \beta - \beta_{codec}$ est la partie de la bande passante utilisée en plus du débit de codage (dues aux entêtes protocolaires et éventuellement à l'utilisation de requêtes étendues).

On considère ci-dessous les deux cas pour les codées AMR et AMR-WB:

- Quand adapt_enabled=0, l'adaptation pour le codée AMR et AMR-WB est limitée à un fonctionnement "basique" avec le CMR existant:
Une seule trame est transportée par paquet, les requêtes d'adaptation pour activer ou désactiver la redondance et l'agrégation ne sont pas disponibles et l'adaptation se limite à envoyer un CMR pour changer le débit de codage (mode) parmi la liste des débits (modes) autorisés par la session, selon la configuration SDP (blocs 600 et 650). On note cette liste $\{R_0, \cdots, R_{M-1}\}$ où M est le nombre de modes autorisés. Par exemple pour AMR il est recommandé de négocier les M = 4 modes suivants {4.75, 5.9, 7.4, 12.2} et pour AMR-WB les M = 3 modes suivants {6.6, 8.85, 12.65} pour maximiser l'inter-opérabilité avec les systèmes 3G mais il est aussi possible de négocier pour AMR-WB une offre/réponse ouverte avec M = 9 modes {6.6, 8.85, 12.65, 14.25, 15.85, 18.25, 19.85, 23.05, 23.85} car les 3 débits les plus faibles {6.6, 8.85, 12.65} sont aussi présents dans ces 9 modes et un CMR peut limiter le débit maximal à au plus 12.65 kbit/s pour inter-opérer; cependant il existe aussi des cas où N=1 seul mode est autorisé, par exemple {12.2} pour AMR.

Si *N*=1, les blocs 603 et 653 ne génèrent aucune requête d'adaptation par le biais de l'élément mémoire « cmr_request » (en sortie des blocs 605 ou 655) autre qu'un CMR indiquant le débit $R_0$ ou bien un CMR avec un code fixé à 15 (NO_REQ). On suppose ci-dessous que *N*>1 et on donne ci-dessous un exemple d'algorithme de décision d'adaptation. Dans des variantes de l'invention d'autres critères et d'autres méthodes de décision pourront être utilisées sans changer la nature de l'invention.

Le débit de codage de la trame précédente d'indice *N*-1 est noté $R_i$ où i dénote l'indice d'un des éléments de $\{R_0, \cdots, R_{M-1}\}$ correspondant au débit de la trame précédente.

Si le taux de perte est trop important (par exemple $\tau \geq$ 10%), on suppose que l'estimation de bande passante disponible n'est pas assez fiable et le critère $\beta$ n'est pas utilisé ; dans ce cas, si en plus de la condition de taux de perte trop important, le dernier changement de débit a eu lieu depuis par exemple 50 trames (1 seconde), on abaisse le débit par précaution, en sélectionnant le débit $R_j$ immédiatement inférieur au débit précédent tel que $j = max(i - 1, 0)$ (l'opérateur max(.) sert ici à s'assurer qu'on ne descend pas plus bas que le débit minimal $R_0$) et cette décision de mode du bloc 605 ou 655 sera convertie par la partie émission en un code CMR (bloc 606 ou 656) pour indiquer le débit $R_j$.

Quand le taux de perte n'est pas trop important (par exemple $\tau$ < 10%) et que le dernier changement de débit a eu lieu depuis par exemple 50 trames (1 seconde), la décision de mode du bloc 605 ou 655 correspond au mode de codage $R_j$ immédiatement inférieur à la bande passante disponible $\beta$, soit $j = arg\,max_k\{k \mid R_k \leq \beta_0\}$ si $\beta_0 \geq R_0$ et $j$ =0 sinon.

Dans des variantes de l'invention, la condition de 50 trames pourra être modifiée, elle sert ici à stabiliser la décision et éviter des changements trop fréquents.

Les blocs 605 et 655 gardent en mémoire la décision de mode en cours via un élément mémorisé qu'on dénote ici "cmr_request" qui contient un élément « cmr_request.updated » et un élément « cmr_request.requested_bitrate » et ces blocs vérifient les tailles de paquets reçus. Tant que l'émetteur distant n'a pas exécuté la requête du récepteur local (autre que NO_REQ) - ce qui se vérifie en comparant le débit du codée utilisé (dérivé de la taille des paquets reçus) avec le débit associé au CMR envoyé -, on répétera la dernière décision de mode pour assurer une transmission robuste de cette décision. Si aucune décision pour changer le mode actuel n'est nécessaire, le bloc 605 ou 655 indiquera qu'un CMR doit être envoyé en utilisant un élément "cmr_request.updated" mis à 1, sinon on fixera "updated=0". Dans des variantes de l'invention, la décision sera répétée un nombre de fois pré-déterminé (par exemple 3 fois).

Au moment de coder chaque nouvelle trame, l'émetteur 601 (ou 651) accède (en général en parallèle avec le bloc 605 ou 655, par « mutex » ou « section critique ») à l'élément mémorisé « cmr_request.updated » et si cet élément vaut 1, l'émetteur va ajouter un champ CMR dans le paquet courant avec la valeur correspondant de « cmr_request.requested_bitrate ». Sinon si l'élément « cmr_request.updated » vaut 0, l'émetteur indiquera soit un CMR de type « NO_REQ » (pas de requête) pour AMR, AMR-WB ou EVS, soit aucun CMR si le codée EVS est configuré pour ne pas envoyer de CMR quand aucune requête n'est à envoyer.

- Quand adapt_enabled=1, l'adaptation pour le codée AMR et AMR-WB est étendue:
Les blocs 601 et 651 comprennent un buffer (une file) de trames codées afin de ne pas avoir à recoder plusieurs fois la même trame. On considère ici que ce buffer de trames codées est configuré selon les paramètres SDP (bloc 600 et 650), en calculant le nombre maximum de trames codées à mémoriser selon les paramètres « max-red » et « maxptime ». Par exemple, si max-red =220 et/ou maxptime=240, on pourra ajuster le buffer pour stocker jusqu'à 12 trames codées.

De plus les blocs 603 et 653 comprennent une lecture du champ ToC et la détection d'une ou plusieurs trames dans le paquet courant, afin de gérer les cas de redondance ou d'agrégation. Si plus d'une trame est détectée dans le paquet courant, les blocs 603 et 653 les séparent et insèrent les différentes trames codées dans le buffer de gigue en réception en fonction du type de transport, par exemple :

- Si le paquet courant contient une agrégation de trames, les trames du paquet courant sont séparées et les trames sont insérées en fonction du « timestamp » du paquet RTP et de l'intervalle de temps séparant ces trames
- Si le paquet courant contient de la redondance, le récepteur vérifie si la trame primaire redondante correspondant à la même trame a déjà été reçue et si c'est le cas on élimine le doublon, autrement la trame est insérée dans le buffer de gigue.

Ces deux cas peuvent également être combinés.

On ne détaille pas ici les détails concernant l'adaptation du buffer de gigue et l'impact sur l'algorithme de gestion du buffer de gigue des différents types d'adaptation. Par exemple, dans le cas de redondance ou d'agrégation, il est important que le buffer de gigue tienne compte de la configuration de transport utilisée, afin d'ajuster le retard de génération de signal audio pour exploiter les trames redondantes ou ajuster l'estimation de la gigue sur le réseau.

On donne ci-dessous un exemple d'algorithme d'adaptation étendue, avec d'abord le cas de la redondance.

On reprend ici la liste des modes $\{R_0, \cdots, R_{M-1}\}$ où M est le nombre de modes autorisés.

Si le taux de perte est trop important (par exemple $\tau \geq 10\%$) et que le dernier changement de débit a eu lieu depuis par exemple 50 trames (1 seconde), la décision d'adaptation consiste à activer la redondance 100%. On prendra dans un exemple le débit 2xR immédiatement inférieur au débit actuel et si aucun débit 2xR ne vérifie cette condition on prendra le débit 2xR le plus faible. Dans ce cas on définit l'élément « cmr_requested.updated » à 1 et on fixe des éléments supplémentaires «« cmr_request.requested_bitrate » à R et « cmr_request.red = 1 » pour indiquer qu'une requête avec redondance 100% avec le débit R doit être envoyée.

Si le taux de perte n'est pas trop important (par exemple $\tau < 10\%$), la décision d'adaptation consiste à désactiver la redondance. Dans ce cas on reprend l'algorithme décrit précédemment : Quand le taux de perte n'est pas trop important (par exemple $\tau < 10\%$) et que le dernier changement de débit a eu lieu depuis par exemple 50 trames (1 seconde), la décision de mode du bloc 605 ou 655 correspond au mode de codage $R_j$ immédiatement inférieur à la bande passante disponible $\beta$, soit $j = arg\ max_k \{k \mid R_k \leq \beta_0\}$ si $\beta_0 \geq R_0$ et $j = 0$ sinon. Dans ce cas on définit l'élément « cmr_requested.updated » à 1 et on fixe des éléments supplémentaires «« cmr_request.requested_bitrate » à R et « cmr_request.red = 0 » pour indiquer qu'une requête CMR classique doit être envoyée.

La décision d'adaptation est donc représentée dans un exemple par le biais d'un élément mémorisé « cmr_request » qui comprend plusieurs éléments :

- « cmr_request.updated » : cette valeur est mise à 1 si une nouvelle décision doit être transmise
- « cmr_request.requested_bitrate » : cette valeur indique le débit de codage à utiliser
- Dans des variantes de l'invention d'autres critères et d'autres méthodes de décision pourront être utilisées sans changer la nature de l'invention. En particulier en cas d'agrégation, un élément mémorisé appelé par exemple « cmr_request.agg » sera défini pour indiquer qu'une requête d'agrégation doit être envoyée.

La décision d'adaptation (blocs 605 et 655) pour le codée EVS est similaire à la description donnée ci-dessous pour les codées AMR et AMR-WB. Cependant, plusieurs spécificités doivent être prises en comptes:

- Le codée EVS permet d'activer le mode CAM qui est un mode "robuste" à 13.2 kbit/s en WB et SWB - ce mode est normalement configuré à partir de SDP (voir Annexe A de TS 26.445 pour les détails du paramètre "ch-aw-recv").
- Toutes les bandes audio (NB, WB, SWB, FB) ne sont pas supportées à tous les débits (voir Table A.6 de TS 26.445). Ainsi pour la génération d'un CMR si la session autorise une gamme de bande audio (par exemple bw=nb-swb), que le débit actuel est SWB-9.6 kbit/s, et que l'adaptation décide de descendre à 8 kbit/s, il faudra générer un CMR pour indiquer le mode WB-8 kbit/s, donc le changement de débit peut impliquer le cas du codée EVS un changement de bande audio codée - contrairement à AMR ou AMR-WB.

Dans le mode de réalisation décrit, aucune décision d'adaptation pour demander un mode CAM ne sera générée par les blocs 605 et 655 pour simplifier la mise en oeuvre. Dans des variantes on pourra activer le mode CAM si par exemple le taux de perte est par exemple <6% et si la bande passante disponible estimée est >13.2 kbit/s, et la redondance 100% ne sera utilisé que pour un taux de perte > 6%.

Dans des exemples de réalisation de l'invention, l'adaptation à effectuer est de type agrégation de trames, selon différents modes que l'on va décrire ultérieurement ou bien de type redondance de trames selon également différents modes décrits ultérieurement, ou encore d'un autre type d'adaptation spécifique à l'application. L'adaptation peut comprendre à la fois de l'agrégation et de la redondance ou un autre type d'adaptation spécifique.

Ces types d'adaptations sont par exemple utiles pour modifier le débit de paquets, corriger les trames reçues erronés ou perdues, etc. ce qui n'est en général pas possible avec une adaptation limitée à la modification du débit de codage (sauf pour le codée EVS où le mode CAM permet partiellement de traiter le problème de pertes de trame, mais ce mode est spécifique à EVS en WB et SWB à 13.2 kbit/s et est typiquement moins performant que la redondance à 100% à fort taux de pertes).

Le principe de fonctionnement des blocs des terminaux A et B restent le même: leur fonctionnement dépend de la configuration SDP et de l'élément mémoire "adapt_enabled".

Une requête d'adaptation correspondant à l'adaptation déterminée en 605 et 655 est insérée dans le paquet RTP courant par les blocs 606 et 656 respectifs, de codage de la requête.

Différents modes de réalisation d'insertion de ces requêtes d'adaptation seront décrits ultérieurement en référence aux figures 8 à 10.

Les blocs 607 et 657 respectifs de décodage de la requête permettent d'extraire et de décoder les requêtes reçues d'un paquet RTP, du récepteur distant, pour que les émetteurs puissent mettre en oeuvre les adaptations demandées. En particulier, on considère ici un exemple de réalisation où l'émetteur accède à des éléments mémorisés « adaptation_info » et « cmr_request » avec éventuellement des éléments mémorisés complémentaires.

Ainsi, la figure 6 illustre les étapes mises en oeuvre lors du procédé de signalisation, à savoir, une étape de vérification (600, 650) de l'existence d'un paramètre de signalisation issue de la phase de négociation ou de configuration de codées utilisés lors de l'initialisation de la session de communication, une étape de détermination (605, 655) d'une requête d'adaptation concernant une demande d'agrégation et/ou de redondance de trames et une étape d'insertion (606, 656) de la requête dans un format de transport via un protocole temps réel de type RTP. Dans des variantes de l'invention, d'autres façons d'échanger les informations que les structures partagées (sous forme d'éléments mémorisés) telles que « cmr_request », « adaptation_info » ou « adapt_enabled » pourront être utilisées.

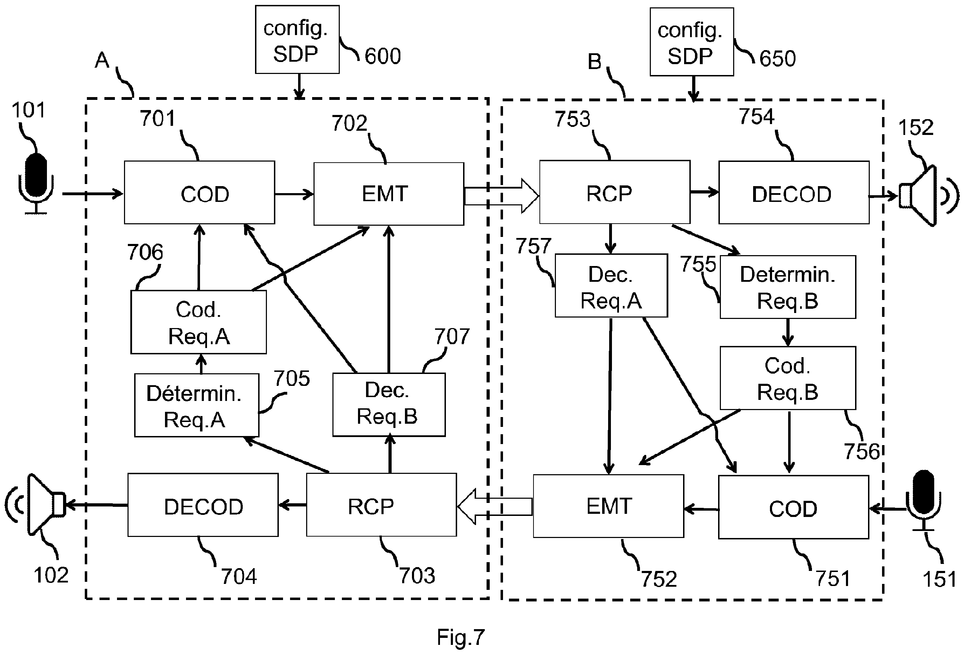

La **figure 7** illustre un mode de réalisation plus détaillé que celui de la figure 6 décrite ci-dessus. Dans ce mode de réalisation, les blocs émetteurs de la figure 6 sont divisés en des blocs de codage (701 et 751) et d'émission (702 et 752) mettant en oeuvre la génération et la transmission de paquets RTP. Les blocs récepteurs de la figure 6 sont divisés en des blocs de décodage (704 et 754) qui peuvent inclure la gestion de buffer de gigue, le décodage de trames reçues et la correction de pertes de trames perdues et de réception (703 et 753). Dans une application de VoIP, les blocs 701 et 702 (ou 751 et 752) sont exécutés en parallèle en "multi-thread" avec la partie liée au codage (701 ou 751) qui dépend des évènements liés à la carte son d'entrée (liée au bloc 701) et avec la partie émission sur le réseau (bloc 702 ou 752) qui dépend des évènements réseaux; de la même façon dans la partie réception, la réception des paquets (703 et 753) peut fonctionner en parallèle de la génération audio (704 et 754).

Les blocs 705 et 755 de détermination de l'adaptation à mettre en oeuvre ont les mêmes fonctions que celles décrites à la figure 6 pour les blocs 605 et 655.

La figure 7 permet de montrer qu'il est possible de distribuer les fonctions de création du format de payload entre le codage (701, 751) et l'émetteur (702,752) selon que le payload est formé par l'un ou l'autre de ces blocs. L'invention s'applique à ces deux cas.

Les requêtes pour ces adaptations ainsi déterminées sont codées par les blocs 706 et 756 et insérés dans un paquet RTP soit par l'intermédiaire du module de codage 701 ou 751, soit par l'intermédiaire de l'émetteur mettant en oeuvre la mise en paquets 702 ou 752.

Les blocs 707 et 757 ont les mêmes fonctions que les blocs 607 et 657 décrits en figure 6. Selon la méthode mise en oeuvre pour transporter la requête d'adaptation, la requête décodée sera envoyée soit au bloc de codage soit au bloc d'émission de la partie émetteur.

On décrit maintenant, en référence à la **figure 8,** comment les codes CMR tels que définis ci-dessous sont utilisés.

Dans un premier mode de réalisation, la requête d'adaptation déterminée par le récepteur d'un terminal est codée dans un champ d'une requête de changement de mode de type CMR pour être transportée vers l'émetteur du terminal distant.

Dans ce mode de réalisation, la signalisation de négociation entre les codées des terminaux à l'initialisation de la session de communication définie un paramètre d'adaptation « adapt_red » ou « adapt_ext » ou un autre nom identifiant une capacité à utiliser une requête étendue comme vu précédemment, permettant d'utiliser un champ CMR qui soit compréhensible à la fois du récepteur et de l'émetteur des terminaux distants.

Lorsque ce paramètre est défini, un champ de code CMR est déterminé pour spécifier le type d'adaptation désiré.

Pour les codées AMR, AMR-WB et EVS tels que décrits précédemment, des codes réservés pour un usage futur ou inutilisés, servent selon l'invention à indiquer des requêtes étendues de changement de mode. Ces codes sont limités à quelques valeurs pour les codées cités.

On distingue deux cas de fonctionnement:

- Quand adapt_enabled=1, on utilise des codes CMR définis comme "reserved", "not used" ou "for future use" pour indiquer une requête étendue.
- Quand adapt_enabled=0, seuls les codes CMR pré-définis dans RFC 4867 pour AMR et AMR-WB et TS 26.445 Annexe A pour EVS, sont utilisés. A la réception (blocs 607, 657), si des codes CMRs définis comme "reserved", "not used" ou "for future use" sont reçus, ils sont ignorés.

Dans un mode de réalisation, le format de codage de ces requêtes inclus dans des champs CMR « réservés » ou inutilisés est décrit ici.

Pour les codées AMR et AMR-WB, les valeurs de CMR entre 8 et 14 (inclusivement) et entre 9 et 14 (inclusivement) sont réservées à un usage futur. Elles sont donc utilisées de façon conditionnelle quand un paramètre de signalisation selon l'invention est défini lors de la négociation de codée et leur utilisation est dédiée à signaler des requêtes de type redondance, agrégation ou autre.

De même pour le codée EVS, comme représenté en référence à la figure 4g, les valeurs avec T = "111" et D autre que "1111", sont marqués comme réservé ("Reserved"), ce qui laisse 15 valeurs possibles.

Dans une variante de réalisation, les valeurs marquées comme non utilisées ("Not used") peuvent également être utilisées, ce qui augmente alors considérablement le nombre de possibilité de codes libres; ceci n'est cependant applicable que pour le codée EVS.

Pour une adaptation de redondance, principalement utilisée pour remplacer des trames manquantes, la redondance 100% consiste à répéter une trame passée (à l'offset K) dans le paquet courant P. Quand les pertes de trames sont aléatoires (loi uniforme avec des valeurs indépendantes et identiquement distribuées ou i.i.d.), cette redondance à 100% permet de transformer un taux de perte de 10% en un taux de perte de 1%.

On considère ici, dans un premier exemple de réalisation, que, pour des réseaux cellulaires de type LTE où des mécanismes de gestion de QoS sont déjà mis en place et négociés pour un appel téléphonique, ce niveau de redondance à 100% est suffisant et qu'il n'est pas nécessaire de considérer des cas de redondance plus élevées (ex: 200 ou 300%).

Dans l'exemple décrit ici, on considère qu'il est peu nécessaire de combiner à la fois une agrégation de trames et la redondance.

On développe ici une version contrainte de signalisation de requête d'agrégation de trames ou de redondance.

On décrit ici les cas possibles de redondance pour les codées AMR, AMR-WB et EVS pour un débit maximum associé au format de transport respectivement d'environ 12.2 kbit/s pour AMR, 12.65 ou 23.85 kbit/s pour AMR-WB et 13.2 ou 24.4 kbit/s pour EVS.

Le tableau 1 ci-dessous montre, pour un codée AMR avec un débit d'environ 12.2 kbit/s, que la redondance est limitée à 3 cas de redondance possibles, notés "2x R" où R est le débit répété. On notera qu'ici l'offset n'est pas spécifié et en pratique le débit associé au format de transport sera plus élevé que le double de R si des informations ToC de type « NO_DATA » doivent être insérées pour indiquer l'offset dans le payload.

On notera que lorsque la redondance est activée, si le débit courant du paquet P est à un débit de 12.2 kbit/s et qu'on commute vers une redondance à 2x5.9 kbit/s à partir du paquet suivant P+1, le premier paquet (d'indice P+1) contient normalement la trame courante avec un débit à 5.9 kbit/s et la trame précédente à un débit de 12.2 kbit/s. C'est seulement au paquet suivant (d'indice P+2) que l'on aura 2 trames à 5.9 kbit/s. Pour le premier paquet, le débit est alors supérieur au débit maximum autorisé. Si la valeur de « b=AS: » du paramètre SDP le permet, cette méthode pour le premier paquet de transition est utilisé sinon, si cette valeur n'autorise pas la surcharge, pour éviter une surcharge temporaire (12.2+5.9), le paquet P+1 ne contiendra que la trame codée à 5.9 kbit/s.

**Tableau 1**

| AMR | Possible en redondance 100% (<12.2) |
|---|---|
| 4.75 | x |
| 5.15 | x |
| 5.9 | x |
| 6.7 | (x) |
| 7.4 | (x) |
| 7.95 | |

(suite)

| AMR | Possible en redondance 100% (<12.2) |
|---|---|
| 10.2 | |
| 12.2 | |

Il est possible d'envisager de permettre de la redondance de type 2x6.7 et 2x7.4 en fonction de la valeur de "b=AS:".

De même, dans le cas d'une adaptation d'agrégation de trames, pour une même limitation de débit maximal pour le codée AMR, on retrouve les mêmes cas utilisables que pour le Tableau 1 ci-dessus.

On peut donc définir les cas suivants (Tableau 2) de code CMR pour le codée AMR avec « RED » pour Redondance:

**Tableau 2**

| Code CMR | Requête AMR |
|---|---|
| 9 | RED 2x4.75 |
| 10 | RED 2x5.15 |
| 11 | RED 2x5.9 |
| 12 | RED 2x6.7 |
| 13 | RED 2x7.4 |
| 14 | Reserved |

Dans des variantes, en particulier quand aucun paramètre SDP complémentaire ne permet de spécifier l'offset de redondance on pourra utiliser les codes CMR précisés au tableau 2bis pour AMR. Cela permet de spécifier à la fois le débit de redondance et l'offset à utiliser (ici 1 ou 3). On notera aussi dans cet exemple les débits de 5.15 et 6.7.

**Tableau 2bis**

| Code CMR | Requête AMR |
|---|---|
| 9 | RED 2x4.75, offset 1 |
| 10 | RED 2x5.9, offset 1 |
| 11 | RED 2x7.4, offset 1 |
| 12 | RED 2x4.75, offset 3 |
| 13 | RED 2x5.9, offset 3 |
| 14 | RED 2x7.4, offset 3 |

Dans d'autres variantes, il sera aussi possible de combiner la redondance et l'agrégation avec deux trames par paquet selon le tableau 2ter, avec « Agg » pour agrégation.

**Tableau 2ter**

| Code CMR | Requête AMR |
|---|---|
| 9 | RED 2x4.75 |
| 10 | RED 2x5.15 |
| 11 | RED 2x5.9 |
| 12 | Agg 2x4.75 |
| 13 | Agg 2x5.15 |

(suite)

| Code CMR | Requête AMR |
|----------|-------------|
| 14 | Agg 2x5.9 |

On rappelle ici que les codes CMR sont listés ici pour permettre une requête "générique" indépendantes des débits autorisés (paramètre SDP "mode-set" pour AMR). Bien entendu les blocs 605 et 606 (et 655 et 656) sont contraints par les débits négociés pour la session, donc certains codes peuvent ne pas être utilisés.

On suppose ici que l'offset pour la redondance est précisé lors de la négociation SDP avec un paramètre qui peut être nommé "red-offset" et qui sera typiquement associé au paramètre SDP permettant d'identifier le code CMR à utiliser. Si ce paramètre « red-offset » n'est pas disponible on pourra utiliser une solution de signalisation de requête comme par exemple donnée dans le tableau 2bis.

Ainsi, si adapt_enabled = 1, les blocs 605 et 655 (ou 705 et 755) vont vérifier la valeur de « cmr_request.updated » et si cette valeur est à 1, ces blocs vont convertir les données complémentaires mémorisées dans « cmr_request ». En particulier, pour le cas du tableau 2, si cmr_request.red = 1, on utilisera l'élément « cmr_request.requested_bitrate » pour trouver le code CMR de 9 à 13. Si cmr_request.red = 0, on on utilisera l'élément « cmr_request.requested_bitrate » pour trouver le code CMR de 0 à 7 correspond au débit.

On suppose ici que les contraintes imposées par les paramètres SDP (b =AS, maxptime, max-red, etc.) sont déjà prises en compte par les blocs de décision 605 et 655.

La même approche est maintenant décrite au Tableau 3 ci-dessous, pour le codée AMR-WB avec deux débits maximum prévus.

**Tableau 3**

| AMR-WB | Possible en redondance 100% (< 12.65) | Possible en redondance 100% (<23.85) |
|--------|----------------------------------------|--------------------------------------|
| 6.6 | x | x |
| 8.85 | | x |
| 12.65 | | (x) |
| 14.25 | | |
| 15.85 | | |
| 18.25 | | |
| 19.85 | | |
| 23.05 | | |
| 23.85 | | |

Selon que le débit maximal du codée est 12.65 kbit/s ou 23.85 kbit/s et selon la valeur de "b=AS:" et les débits autorisés dans la session (voir le paramètre "mode-set"), on voit que la redondance à 100% ne permet qu'un cas (2x6.6) pour le débit 12.65 kbit/s ou trois cas pour le débit 23.85 kbit/s.

On notera que le 3ième cas de la redondance 100% pour 12.65 kbit/s dépasse un peu le débit nominal de 23.85 kbit/s et dans ce cas, il faut s'assurer que le service est bien dimensionné pour un débit légèrement plus élevé que le débit "normal" du codée AMR-WB, typiquement en adaptant la valeur de "b=AS" dans la signalisation de négociation SDP, à une valeur plus élevée.

On peut donc définir les cas suivants (Tableau 4) de code CMR pour le codée AMR-WB:

**Tableau 4**

| Code CMR | Requête AMR-WB |
|----------|----------------|
| 9 | RED 2x6.6 |
| 10 | RED 2x8.85 |
| 11 | RED 2x12.65 |
| 12 | Agg 2x6.6 |

(suite)

| Code CMR | Requête AMR-WB |
|----------|----------------|
| 13 | Agg 2x8.85 |
| 14 | Agg 2x12.65 |

Dans des variantes on pourra restreindre l'espace de signalisation de requêtes étendues à de la redondance à différents offsets, par exemple selon le tableau 4bis.

**Tableau 4bis**

| Code CMR | Requête AMR-WB |
|----------|----------------|
| 9 | RED 2x6.6, offset = 1 |
| 10 | RED 2x8.85, offset = 1 |
| 11 | RED 2x12.65, offset = 1 |
| 12 | RED 2x6.6, offset = 3 |
| 13 | RED 2x8.85, offset = 3 |
| 14 | RED 2x12.65, offset = 3 |

Dans des variantes de l'invention l'ordre de ces valeurs pourra être modifié et certaines valeurs pourront être supprimées dans tous les tableaux. Il sera aussi possible de définir des variantes supplémentaires en intégrant par exemple de la redondance à 200% ou des options pour la valeur de l'offset de redondance.

Là encore, si adapt_enabled = 1, les blocs 605 et 655 (ou 705 et 755) vont vérifier la valeur de « cmr_request.updated » et si cette valeur est à 1, ces blocs vont convertir les données complémentaires mémorisées dans « cmr_request ». En particulier, pour le cas du tableau 4, si cmr_request.red = 1, on utilisera l'élément « cmr_request.requested_bitrate » pour trouver le code CMR de 9 à 11. Si cmr_request.red = 0, on on utilisera l'élément « cmr_request.requested_bitrate » pour trouver le code CMR de 0 à 8 correspond au débit.

On suppose ici que les contraintes imposées par les paramètres SDP (b =AS, maxptime, max-red, etc.) sont déjà prises en compte par les blocs de décision 605 et 655.

La même approche peut être utilisée pour le codée EVS. Cependant, à la différence des codées AMR ou AMR-WB, le codée EVS comprend plusieurs modes d'opérations: EVS-NB, EVS-WB, EVS-SWB, EVS-FB et EVS AMR-WB IO ainsi que des modes spécifiques comme VBR ou CAM.

On considère ici que le cas d'EVS AMR-WB IO peut être dérivé du cas AMR-WB discuté plus haut. Pour la partie "EVS Primary" en faisant abstraction de la bande audio codée on peut définir le tableau suivant (Tableau 5):

**Tableau 5**

| EVS | A1 Possible en redondance 100% (<13.2) bw=nb-swb | A2 Possible en redondance 100% (<24.4) bw=nb-swb | B1 Possible en redondance 100% (< 13.2) bw=swb | B2 Possible en redondance 100% (<24.4) bw=swb |
|-----|------|------|------|------|
| 5.9-VBR | [x] | [x] | | |
| 7.2 | (x) | x | | |
| 8 | | x | | |
| 9.6 | | x | (x) | X |
| 13.2 | | (x) | | (x) |
| 16.4 | | | | |
| 24.4 | | | | |

Ce tableau s'appuie ici sur la spécification GSMA IR.92 V11.0 (15 juin 2017) où 5 configurations (profils) sont définies pour EVS. On ne retient ici que les quatre configurations (A1, A2, B1, B2) qui permettent d'avoir un espace d'adaptation de type redondance ou agrégation.

On notera que l'utilisation de redondance ou d'agrégation pour le mode VBR est discutable et complique potentiellement la mise en oeuvre de la mise en paquets. Pour cette raison le mode VBR est indiqué ici avec la notation « [x] » dans le tableau 5. On se restreint ici à des débits fixes. Cependant, dans des variantes il sera possible aussi d'inclure le mode VBR dans les codes CMR selon l'invention.

Le nombre de codes CMR réservés pour les codées EVS est de 15.

Pour les codées AMR-WB, on a vu qu'on dénombrait 6 cas. Pour le codée EVS, on peut limiter l'adaptation aux modes NB, WB, SWB car le mode FB ne commence qu'à 16.4 kbit/s. On peut donc définir les cas suivants (Tableau 6) de code CMR pour le codée EVS:

**Tableau 6**

| Code CMR | Requête EVS |
|----------|-------------|
| 111 0000 | RED 2x7.2-NB |
| 111 0001 | RED 2x8-NB |
| 111 0010 | RED 2x9.6-NB |
| 111 0011 | RED 2x13.2-NB |
| 111 0100 | RED 2x7.2-WB |
| 111 0101 | RED 2x8-WB |
| 111 0110 | RED 2x9.6-WB |
| 111 0111 | RED 2x13.2-WB |
| 111 1000 | RED 2x7.2-SWB |
| 111 1001 | RED 2x8-SWB |
| 111 1010 | RED 2x9.6-SWB |
| 111 1011 | RED 2x13.2-SWB |
| 111 1100 | RED 2x6.6 |
| 111 1101 | RED 2x8.85 |
| 111 1110 | RED 2x12.65 |

On observe que ce tableau ne comprend pas de valeurs de code pour une adaptation d'agrégation. On ne détaille pas ici les valeurs choisies parmi les valeurs « Not used » pour indiquer les requêtes étendues, par souci de concision. Cependant les exemples données pour les codées AMR et AMR-WB peuvent être étendues pour le codée EVS.

Dans un mode de réalisation possible, on peut, dans ce cas, utiliser des valeurs 'Not used' de CMR pour définir des modes d'agrégation.

Dans des variantes de l'invention l'ordre de ces valeurs pourra être modifié et certaines valeurs pourront être supprimées ou remplacées. En particulier dans des variantes de l'invention, un code CMR pour les codées AMR, AMR-WB ou EVS pourra être réservé pour signaler d'autres types d'adaptation que la redondance et l'agrégation.

Dans d'autres variantes de l'invention, l'agrégation ne sera pas utilisée et à la place des codes CMR pourront être réservés pour des cas (limités) de redondance à 200% (ce qui triple environ le débit): AMR à 4.75 kbit/s, AMR-WB à 6.6 kbit/s, EVS de 7.2 à 8 kbit/s pour Primary (pour les bandes NB, WB), à 9.6 kbit/s pour Primary (bandes NB, WB SWB) et à 6.6 kbit/s pour EVS AMR-WB IO.

Dans le cas des codées AMR et AMR-WB le champ CMR est toujours présent, pour EVS il est également toujours présent pour EVS AMR-WB IO (sur 3 bits en mode Compact et un octet en mode Header-full) et pour les modes EVS Primary cela dépend du paramètre SDP appelé "cmr" (voir Annexe A de TS 26.445 pour les détails associés).

Le champ CMR est un entête des données utiles du format de transport RTP pour les codées AMR, AMR-WB et EVS, le champ existant pour ces codées reste le même, comme indiqué à la figure 8. Cependant on désigne ce champ comme « ext.CMR » ou « CMR étendu » dans le sens où les valeurs actuellement définies comme réservée pour un usage futur ("for future used", "reserved") et éventuellement les valeurs non utilisées ("not used") sont à présent utilisées comme définies précédemment pour indiquer une requête d'adaptation, à la condition qu'un paramètre de signalisation active cette caractéristique.

La requête d'adaptation sous forme de nouveaux codes CMR est donc insérée dans des paquets RTP définis par un entête RTP (« RTP header ») représentée sur la figure 8. Cet entête comporte les champs suivants :

- V pour « version » qui identifie la version du RTP
- P pour « padding », s'il est mis à 1, le paquet contient des octets de bourrage en plus du payload et cela à la fin du paquet
- X pour « extension », s'il est mis à 1 l'entête existant est suivi par une extension
- CC pour « CSRC count » indique le nombre des identificateurs des CSRC
- M pour «marker » indique si les données actuelles ont une pertinence particulière pour l'application
- PT pour « payload type » indique le format du payload
- « Sequence number » est incrémenté de 1 pour chaque paquet RTP envoyé et permet au récepteur de détecter les pertes et restaurer les séquences de paquets
- « Timestamp » pour spécifier le temps d'envois de chaque paquet et permettant au récepteur de lire les échantillons reçus à des intervalles appropriés
- SSRC pour « Synchronization source » qui identifie chaque source du même flow différemment
- CSRC pour « Contributing sources » qui indique les sources qui contribuent au payload du paquet.

On notera qu'il est possible de rajouter un ou des paramètre(s) de signalisation pour, par exemple, paramétrer l'offset en cas de redondance à 100%.

Ce mode de réalisation de l'invention a l'avantage de ne pas augmenter la taille des paquets IP et de ne pas modifier l'entête RTP des paquets.

Ainsi, il est toujours possible d'effectuer une compression d'entête RTP dans certains cas d'usage, sans que cela n'impacte les requêtes d'adaptation. Cette solution a cependant l'inconvénient de n'avoir qu'un espace de signalisation limité et ne s'applique qu'aux codeurs définissant le concept de CMR pour lesquels un nombre de codes libres est suffisant.

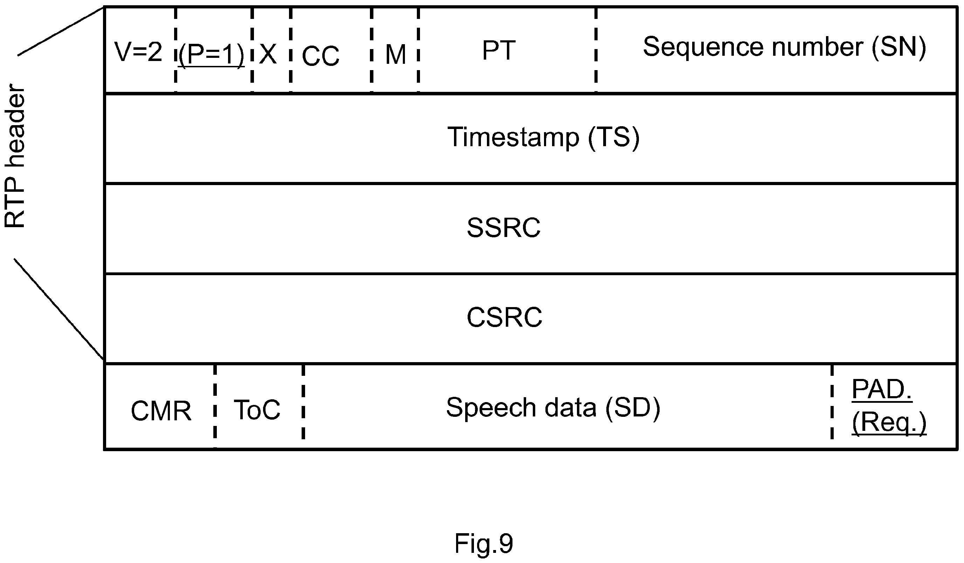

Dans un deuxième mode de réalisation, illustré à la **figure 9,** la requête d'adaptation déterminée par le récepteur d'un terminal est codée dans un champ de la requête de remplissage de fin de signalisation du protocole pour être transportée vers l'émetteur du terminal distant.

Dans ce mode de réalisation, la signalisation de négociation entre les codecs des terminaux à l'initialisation de la session de communication définie un paramètre d'adaptation "adapt_red" ou « adapt_ext » comme vu précédemment, permettant d'utiliser ce champ de remplissage (« Padding ») qui soit compréhensible à la fois du récepteur et de l'émetteur des terminaux distants.

Lorsque ce paramètre est défini, un champ de remplissage est déterminé pour spécifier le type d'adaptation désiré.

On utilise un champ de remplissage (« padding ») sur un octet (PAD.Req) pour y insérer un code CMR étendu comme défini ci-dessus sur un octet.

Le padding est typiquement inséré à la fin du payload, et pour éviter de diminuer l'efficacité de la compression d'entête on ne fixera pas le bit "P" de l'entête RTP à 1. Par contre le padding sera inséré avec la requête suivie par un octet supplémentaire indiquant le nombre d'octets de padding selon la RFC 3550. Cette approche permet d'éviter de potentiels impacts sur des terminaux existants.

Dans des variantes, les bits de padding (avant le dernier octet ajouté indiquant le nombre d'octets de padding) suivront la même syntaxe que dans le format de codage de requête dans RTCP APP selon TS 26.114 (chapitre 10), avec en particulier un préfixe sur 4 bits « ID ».

Dans des variantes, pour le codée EVS, le padding normalement à zéro en mode "Header-full" dans la "paquetisation" par défaut sera remplacé par le padding selon l'invention. Cela a l'avantage de ne minimiser le nombre d'octets supplémentaires.

Pour les codées AMR et AMR-WB, on reprend le CMR sur 4 bits existant dans l'état de l'art comme spécifié par la figure 3c et on insère les nouveaux "codes CMR" tels que définis dans le premier mode de réalisation sur 4 bits dans le LSB, à la fin du train binaire comme illustré sur la figure 9; les 4 autres bits dans le MSB seront mis à zéro. Dans des variantes les LSB et MSB seront intervertis.

On retrouve ici, sur cette figure 9, l'entête RTP qui comporte les champs suivants : V pour « version » qui identifie la version du RTP

- P pour « padding », s'il est mis à 1, le paquet contient des octets de bourrage en plus du payload et cela à la fin du paquet. Selon l'invention on préfère ne pas mettre le bit de padding à 1 afin de ne pas diminuer l'efficacité de la compression d'entête. Dans des variantes, ce bit sera mis à 1 dans la variante de réalisation correspond à la figure 10.
- X pour « extension », s'il est mis à 1 l'entête existant est suivi par une extension
- CC pour « CSRC count » indique le nombre des identificateurs des CSRC

- M pour «marker » indique si les données actuelles ont une pertinence particulière pour l'application
- PT pour « payload type » indique le format du payload
- « Sequence number » est incrémenté de 1 pour chaque paquet RTP envoyé et permet au récepteur de détecter les pertes et restaurer les séquences de paquets
- « Timestamp » pour spécifier le temps d'envois de chaque paquet et permettant au récepteur de lire les échantillons reçus à des intervalles appropriés
- SSRC pour « Synchronization source » qui identifie chaque source du même flow différemment
- CSRC pour « Contributing sources » qui indique les sources qui contribuent au payload du paquet.

Les données utiles comportent donc le champ CMR classique, le champ ToC tel que défini précédemment, les données de voix « Speech data » et la requête d'adaptation telle que définie.

Pour le codée EVS, on utilise de la même façon le champ de remplissage à la fin du train binaire pour insérer les codes CMR tels que définis dans le premier mode de réalisation.

Cependant, dans ce cas, le CMR pour les codées AMR et AMR-WB devra être fixé à "NO_REQ" et le paramètre de signalisation permettra de comprendre que le champ de remplissage « padding » avec le "CMR étendu" sur un octet est à prendre en considération.

Ce mode de réalisation a l'avantage de pouvoir à la fois spécifier un changement de mode classique par un code CMR existant et une demande d'adaptation différente par l'utilisation de nouveau code à un endroit différent dans le format de transport.

Cette solution a également l'avantage de ne pas modifier l'entête RTP des paquets.

Ainsi, il est toujours possible d'effectuer une compression d'entête RTP dans certains cas d'usage, sans que cela n'impacte les requêtes d'adaptation.

Les différents blocs des figures 6 et 7 ont une fonctionnement inchangé, mis à part que la requête étendue est transportée dans un champ de padding.

Dans un mode de réalisation possible, la requête d'adaptation telle que définie par les nouveaux codes CMR, pourra être insérée dans l'entête du format de transport RTP comme illustré sur la **figure 10.** Cependant, cette méthode a l'inconvénient, d'une part d'augmenter la taille des paquets RTP et d'autre part, de réduire l'efficacité des méthodes de compression d'entête existantes car le bit d'extension (X) de l'entête RTP doit être mis à 1.

Les différents blocs des figures 6 et 7 ont un fonctionnement inchangé, mis à part que la requête étendue est transportée dans une extension d'entête. L'extension d'entête est ici supposée être signalée selon la RFC 5285 avec le champ « extmap ». Dans des variantes, d'autres méthodes d'extension seront utilisés.

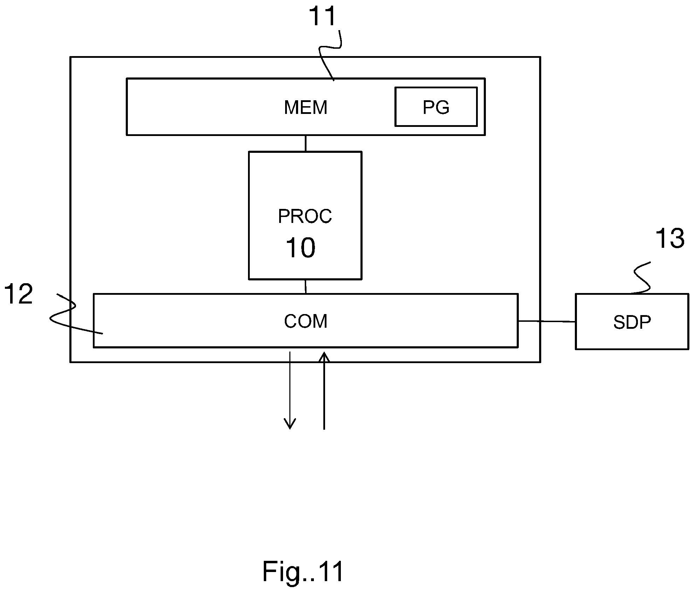

La **figure 11** décrit à présent un exemple de réalisation matérielle d'un terminal de communication comportant un dispositif récepteur apte à mettre en oeuvre le procédé de signalisation selon l'invention, en utilisant en particulier au moins un paramètre de configuration ou de signalisation de type SDP.

Le terminal TA comporte un espace de stockage 11, par exemple une mémoire MEM, une unité de traitement 10 comportant un processeur P, piloté par un programme informatique PG, stocké dans la mémoire 11 et mettant en oeuvre le procédé de signalisation selon l'invention.

A l'initialisation, les instructions de code du programme PG sont par exemple chargées dans une mémoire RAM (non représentée) avant d'être exécutées par le processeur P de l'unité de traitement 10. Les instructions de programme peuvent être mémorisées sur un support de stockage tel qu'une mémoire flash, un disque dur ou tout autre support de stockage non-transitoire.

Le processeur de traitement met en oeuvre le procédé de signalisation tel que décrit en référence à la figure 6, selon les instructions de programme PG.

Le terminal TA comporte un module de communication 12 apte à recevoir et transmettre des données temps réelles à un réseau de communication et apte à lire des données de signalisation ou de configuration de type SDP 13 soit à travers la signalisation émise dans le réseau soit dans la mémoire 11 du terminal. L

Le terminal comprend un dispositif récepteur comportant, un module de vérification de l'existence d'un paramètre de signalisation issue de la phase de négociation de codées utilisés lors de l'initialisation de la session de communication, un module d'adaptation apte à déterminer une requête d'adaptation concernant une demande d'agrégation et/ou de redondance de trames et un module d'insertion de la requête dans un format de transport via un protocole temps réel de type RTP. Ces modules sont tels que décrits en référence à la figure 6 ou à la figure 7.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.)

# EP 3 692 696 B1

Le terminal est par exemple un téléphone, un téléphone intelligent, une tablette, un ordinateur, une passerelle résidentielle ou un objet connecté.

## ANNEXE 1

| Offre SDP classique |
|---|
| m=audio 49152 RTP/AVP 97 98 99 100 101 |
| b=AS:42 |
| b=RS:0 |
| b=RR:2000 |
| a=rtpmap:97 EVS/16000/1 |
| a=fmtp:97 br=9.6-24.4; bw=swb; max-red=220 |
| a=rtpmap:98 AMR-WB/16000/1 |
| a=fmtp:98 mode-change-capability=2; max-red=220 |
| a=rtpmap:99 AMR-WB/16000/1 |
| a=fmtp:99 mode-change-capability=2; max-red=220; octet-align=1 |
| a=rtpmap:100 AMR/8000/1 |
| a=fmtp:100 mode-change-capability=2; max-red=220 |
| a=rtpmap:101 AMR/8000/1 |
| a=fmtp:101 mode-change-capability=2; max-red=220; octet-align=1 |
| a=ptime:20 |
| a=maxptime:240 |

## ANNEXE 2

| Offre SDP avec un paramètre d'adaptation |
|---|
| m=audio 49152 RTP/AVP 97 98 99 100 101 |
| a=adapt red: red-offset=2 |
| b=AS:42 |
| b=RS:0 |
| b=RR:2000 |
| a=rtpmap:97 EVS/16000/1 |
| a=fmtp:97 br=9.6-24.4; bw=swb; max-red=220 |
| a=rtpmap:98 AMR-WB/16000/1 |
| a=fmtp:98 mode-change-capability=2; max-red=220 |
| a=rtpmap:99 AMR-WB/16000/1 |
| a=fmtp:99 mode-change-capability=2; max-red=220; octet-align=1 |
| a=rtpmap:100 AMR/8000/1 |
| a=fmtp:100 mode-change-capability=2; max-red=220 |
| a=rtpmap:101 AMR/8000/1 |
| a=fmtp:101 mode-change-capability=2; max-red=220; octet-align=1 |
| a=ptime:20 |
| a=maxptime:240 |

## ANNEXE 3

| Offre SDP avec un paramètre d'adaptation |
|---|
| m=audio 49152 RTP/AVP 97 98 99 100 101 |
| a=adapt ext: red-offset=1,2; agg=1 |
| b=AS:42 |
| b=RS:0 |
| b=RR:2000 |
| a=rtpmap:97 EVS/16000/1 |
| a=fmtp:97 br=9.6-24.4; bw=swb; max-red=220 |
| a=rtpmap:98 AMR-WB/16000/1 |
| a=fmtp:98 mode-change-capability=2; max-red=220 |
| a=rtpmap:99 AMR-WB/16000/1 |
| a=fmtp:99 mode-change-capability=2; max-red=220; octet-align=1 |
| a=rtpmap:100 AMR/8000/1 |
| a=fmtp:100 mode-change-capability=2; max-red=220 |
| a=rtpmap:101 AMR/8000/1 |
| a=fmtp:101 mode-change-capability=2; max-red=220; octet-align=1 |
| a=ptime:20 |
| a=maxptime:240 |

## Revendications

1. Procédé de signalisation d'une requête d'adaptation de codage/décodage de signaux temps réels d'une session de communication temps réel entre un premier terminal et un second terminal, **caractérisé en ce que** la requête d'adaptation concerne une demande d'agrégation et/ou de redondance de trames, qu'elle est générée selon l'existence d'un paramètre de signalisation issue de la phase de négociation de codées utilisés lors de l'initialisation de la session de communication, le paramètre de signalisation indiquant la capacité d'utiliser un code existant réservé ou inutilisé de type Codec Mode Request, CMR, pour coder une demande d'agrégation et/ou de redondance de trames et en ce la requête d'adaptation est transportée via un protocole temps réel de type Real Time Protocol, RTP, en utilisant un champ inclus dans une requête de changement de mode de codage de type CMR et un code CMR existant réservé ou inutilisé.

2. Procédé selon la revendication 1, dans lequel, dans le cas où les premier et second terminaux utilisent des codeurs/décodeurs de type Adaptive Multi-Rate, AMR, ou Adaptive Multi Rate-Wide Band, AMR-WB, au moins un code CMR inutilisé par défaut de valeur allant de 9 à 14 est utilisé pour coder des requêtes d'agrégation et de redondances de différents débits.

3. Procédé selon la revendication 1, dans lequel, dans le cas où les premier et second terminaux utilisent des codeurs/décodeurs de type Enhanced Voice Services, EVS, au moins un code CMR inutilisé par défaut de valeur T = "111" et D, autre que "1111", est utilisé pour coder des requêtes de redondances de différents débits.

4. Dispositif de signalisation transmettant une signalisation d'une requête d'adaptation de codage/décodage de signaux temps réels d'une session de communication temps réel entre un premier terminal et un second terminal, **caractérisé en ce qu'**il comporte :

   - un module de vérification de l'existence d'un paramètre de signalisation issue de la phase de négociation de codées utilisés lors de l'initialisation de la session de communication, le paramètre de signalisation indiquant la capacité d'utiliser un code existant réservé ou inutilisé de type Codec Mode Request, CMR, pour coder une demande d'agrégation et/ou de redondance de trames ;
   - un module d'adaptation apte à déterminer une requête d'adaptation concernant une demande d'agrégation et/ou de redondance de trames et ;
   - un module d'insertion de la requête dans un format de transport via un protocole temps réel de type Real Time Protocol, RTP, en utilisant un champ inclus dans une requête de changement de mode de codage de type CMR et un code CMR existant réservé ou inutilisé.

**5.** Terminal de communication comportant un dispositif de signalisation selon la revendication 4.

**6.** Programme informatique comportant des instructions de code pour la mise en oeuvre des étapes du procédé de signalisation selon l'une des revendications 1 à 3, lorsque ces instructions sont exécutées par un processeur.

**7.** Support de stockage, lisible par un processeur, mémorisant un programme informatique comportant des instructions pour l'exécution du procédé de signalisation selon l'une des revendications 1 à 3.

**Patentansprüche**

**1.** Verfahren zur Signalisierung einer Anfrage zur Anpassung einer Codierung/Decodierung von Echtzeitsignalen einer Echtzeit-Kommunikationssitzung zwischen einem ersten Endgerät und einem zweiten Endgerät, **dadurch gekennzeichnet, dass** die Anpassungsanfrage eine Anforderung zur Aggregation und/oder Redundanz von Rahmen betrifft, dass sie je nach dem Vorliegen eines Parameters einer Signalisierung erzeugt wird, die aus der Aushandlungsphase für Codecs hervorgeht, die bei der Initialisierung der Kommunikationssitzung verwendet werden, wobei der Signalisierungsparameter die Kapazität zur Verwendung eines reservierten oder ungenutzten bestehenden Codes vom Typ Codec Mode Request, CMR, zur Codierung einer Anforderung zur Aggregation und/oder Redundanz von Rahmen angibt, und dadurch, dass die Anpassungsanfrage über ein Echtzeitprotokoll vom Typ Real Time Protocol, RTP, unter Verwendung eines Felds, das in einer Anfrage zur Codierungsmodusänderung vom Typ CMR enthalten ist, und eines reservierten oder ungenutzten bestehenden CMR-Codes transportiert wird.

**2.** Verfahren nach Anspruch 1, wobei in dem Fall, dass das erste und zweite Endgerät Codierer/Decodierer vom Typ Adaptive Multi-Rate, AMR, oder Adaptive Multi Rate-Wide Band, AMR-WB, verwenden, wenigstens ein standardmäßig ungenutzter CMR-Code mit einem Wert von 9 bis 14 dafür genutzt wird, Anfragen zur Aggregation und zu Redundanzen verschiedener Übertragungsraten zu codieren.

**3.** Verfahren nach Anspruch 1, wobei in dem Fall, dass das erste und zweite Endgerät Codierer/Decodierer vom Typ Enhanced Voice Services, EVS, verwenden, wenigstens ein standardmäßig ungenutzter CMR-Code mit einem Wert T = "111" und D, der nicht "1111" ist, dafür genutzt wird, Anfragen zu Redundanzen verschiedener Übertragungsraten zu codieren.

**4.** Signalisierungsvorrichtung, die eine Signalisierung einer Anfrage zur Anpassung einer Codierung/Decodierung von Echtzeitsignalen einer Echtzeit-Kommunikationssitzung zwischen einem ersten Endgerät und einem zweiten Endgerät überträgt, **dadurch gekennzeichnet, dass** sie Folgendes aufweist:

- ein Modul zur Überprüfung auf das Vorliegen eines Parameters einer Signalisierung, die aus der Aushandlungsphase von Codecs hervorgeht, die bei der Initialisierung der Kommunikationssitzung verwendet werden, wobei der Signalisierungsparameter die Kapazität zur Verwendung eines reservierten oder ungenutzten bestehenden Codes vom Typ Codec Mode Request, CMR, zur Codierung einer Anforderung zur Aggregation und/oder Redundanz von Rahmen angibt;
- ein Anpassungsmodul, das geeignet ist, eine Anfrage zur Anpassung bezüglich einer Anforderung zur Aggregation und/oder Redundanz von Rahmen zu bestimmen, und;
- ein Modul zur Einfügung der Anfrage in ein Format zum Transport über ein Echtzeitprotokoll vom Typ Real Time Protocol, RTP, unter Verwendung eines Felds, das in einer Anfrage zur Codierungsmodusänderung vom Typ CMR enthalten ist, und eines reservierten oder ungenutzten bestehenden CMR-Codes.

**5.** Kommunikationsendgerät aufweisend eine Signalisierungsvorrichtung nach Anspruch 4.

**6.** Computerprogramm, das Code-Anweisungen für die Durchführung der Schritte des Signalisierungsverfahrens nach einem der Ansprüche 1 bis 3, wenn diese Anweisungen von einem Prozessor ausgeführt werden, aufweist.

**7.** Prozessorlesbares Speichermedium, auf dem ein Computerprogramm mit Anweisungen für die Ausführung des Signalisierungsverfahrens nach einem der Ansprüche 1 bis 3 gespeichert ist.

**Claims**

1. Method for signalling an adaptation request that requests adaptation of the coding/decoding of real-time signals of a real-time communication session between a first terminal and a second terminal, **characterized in that** the adaptation request relates to a frame redundancy and/or aggregation request, **in that** it is generated depending on the existence of a signalling parameter obtained in the phase of negotiation of the codecs used that took place during the initialization of the communication session, the signalling parameter indicating the capacity to use an existing reserved or not used CMR type code, CMR standing for Codec Mode Request, to code a frame redundancy and/or aggregation request and **in that** the adaptation request is transported via a real time protocol of RTP type, RTP standing for Real-time Transport Protocol, using a field included in a CMR type coding-mode-change request and an existing reserved or not used CMR code.

2. Method according to Claim 1, wherein, in the case where the first and second terminals use coders/decoders of AMR or AMR-WB type, AMR standing for Adaptive Multi-Rate and AMR-WB standing for Adaptive Multi-Rate Wide Band, at least one not used CMR code by default of value ranging from 9 to 14 is used to code aggregation and redundancy requests that request aggregation and redundancies of various rates.

3. Method according to Claim 1, wherein, in the case where the first and second terminals use coders/decoders of EVS type, EVS standing for Enhanced Voice Services, at least one not used CMR code by default of value T = "111" and D other than "1111" is used to code the redundancy requests that request redundancies of various rates.

4. Signalling device that transmits a signalling of an adaptation request that requests adaptation of the coding/decoding of real-time signals of a real-time communication session between a first terminal and a second terminal, **characterized in that** it comprises:

   - a module for verifying the existence of a signalling parameter obtained in the phase of negotiation of the codecs used that took place during the initialization of the communication session, the signalling parameter indicating the capacity to use an existing reserved or not used CMR type code, CMR standing for Codec Mode Request, to code a frame redundancy and/or aggregation request;
   - an adapting module able to determine an adaptation request relating to a frame redundancy and/or aggregation request; and
   - a module for inserting the request into a payload format via a real time protocol of RTP type, RTP standing for Real-time Transport Protocol, using a field included in a CMR type coding-mode-change request and an existing reserved or not used CMR code.

5. Communication terminal comprising a signalling device according to Claim 4.

6. Computer program containing code instructions for implementing steps of the signalling method according to one of Claims 1 to 3, when these instructions are executed by a processor.

7. Processor-readable storage medium storing a computer program containing instructions for the execution of the signalling method according to one of Claims 1 to 3.

Fig.1 (Art Antérieur)

EP 3 692 696 B1

FIG 2a

FIG 2b

FIG 2c

FIG 2d

(Art Antérieur)

EP 3 692 696 B1

EP 3 692 696 B1

| PH | ToC | SD |
|---|---|---|

**FIG 3a**

| 0 | 1 | 2 | 3 |
|---|---|---|---|
| CMR | | | |

**FIG 3b**

| Index | AMR | AMR-WB |
|---|---|---|
| 0 | AMR 4.75 | AMR-WB 6.60 |
| 1 | AMR 5.15 | AMR-WB 8.85 |
| 2 | AMR 5.9 | AMR-WB 12.65 |
| 3 | AMR 6.7 | AMR-WB 14.25 |
| 4 | AMR 7.4 | AMR-WB 15.85 |
| 5 | AMR 7.95 | AMR-WB 18.25 |
| 6 | AMR 10.2 | AMR-WB 19.85 |
| 7 | AMR 12.2 | AMR-WB 23.05 |
| 8 | - | AMR-WB 23.85 |

**FIG 3c**

| 0 | 1 | 2 | 3 | 4 | 5 |
|---|---|---|---|---|---|
| F | Frame Type | | | | Q |

**FIG 3d**

**(Art Antérieur)**

EP 3 692 696 B1

0                                                    (PL_SIZE-1)

| SD |
|---|

## FIG 4a

0 1 2 3 4 5 6 7 0 1 ...          (PL size – 1)

| CMR | d(1..5) | d(6) ... d(last), d(0) | P |
|---|---|---|---|

## FIG 4b

| 0 | 1 | 2 | 3 | 4 | 5 | 6 | 7 |
|---|---|---|---|---|---|---|---|
| H | T | | | D | | | |

## FIG 4e

0            8                                         PL SIZE-1

| 0 | ToC | SD | ZERO P |
|---|---|---|---|

## FIG 4c

| 0 | 1 | 2 | 3 | 4 | 5 | 6 | 7 |
|---|---|---|---|---|---|---|---|
| H | F | FT | | | | | |

## FIG 4f

0            8              16            24                    PL_SIZE-1

| 1 | CMR | 0 | ToC | 0 | ToC | SD | SD | Zero P |
|---|---|---|---|---|---|---|---|---|

## FIG 4d

(Art Antérieur)

Table 1 (T = 000 / 001), Table 2 (T = 010 / 011):

| Code T | Code D | Definition | Definition | Code T | Code D | Definition | Definition |
|---|---|---|---|---|---|---|---|
| 000 | 0000 | NB | 5.9 (VBR) | 010 | 0000 | WB | 5.9 (VBR) |
| | 0001 | NB | 7.2 | | 0001 | WB | 7.2 |
| | 0010 | NB | 8.0 | | 0010 | WB | 8.0 |
| | 0011 | NB | 9.6 | | 0011 | WB | 9.6 |
| | 0100 | NB | 13.2 | | 0100 | WB | 13.2 |
| | 0101 | NB | 16.4 | | 0101 | WB | 16.4 |
| | 0110 | NB | 24.4 | | 0110 | WB | 24.4 |
| | 0111 | | Not Used | | 0111 | WB | 32 |
| | 1000 | | Not Used | | 1000 | WB | 48 |
| | 1001 | | Not Used | | 1001 | WB | 64 |
| | 1010 | | Not Used | | 1010 | WB | 94 |
| | 1011 | | Not Used | | 1011 | WB | 128 |
| | 1100 | | Not Used | | 1100 | | Not Used |
| | 1101 | | Not Used | | 1101 | | Not Used |
| | 1110 | | Not Used | | 1110 | | Not Used |
| | 1111 | | Not Used | | 1111 | | Not Used |
| 001 | 0000 | IO | 6.60 | 011 | 0000 | | Not Used |
| | 0001 | IO | 8.85 | | 0001 | | Not Used |
| | 0010 | IO | 12.65 | | 0010 | | Not Used |
| | 0011 | IO | 14.25 | | 0011 | SWB | 9.6 |
| | 0100 | IO | 15.85 | | 0100 | SWB | 13.2 |
| | 0101 | IO | 18.25 | | 0101 | SWB | 16.4 |
| | 0110 | IO | 19.85 | | 0110 | SWB | 24.4 |
| | 0111 | IO | 23.05 | | 0111 | SWB | 32 |
| | 1000 | IO | 23.85 | | 1000 | SWB | 48 |
| | 1001 | | Not Used | | 1001 | SWB | 64 |
| | 1010 | | Not Used | | 1010 | SWB | 94 |
| | 1011 | | Not Used | | 1011 | SWB | 128 |
| | 1100 | | Not Used | | 1100 | | Not Used |
| | 1101 | | Not Used | | 1101 | | Not Used |
| | 1110 | | Not Used | | 1110 | | Not Used |
| | 1111 | | Not Used | | 1111 | | Not Used |

Table 3 (T = 100 / 101), Table 4 (T = 110 / 111):

| Code T | Code D | Definition | Definition | Code T | Code D | Definition | Definition |
|---|---|---|---|---|---|---|---|
| 100 | 0000 | | Not Used | 110 | 0000 | SWB | 13.2 CA-L-O2 |
| | 0001 | | Not Used | | 0001 | SWB | 13.2 CA-L-O3 |
| | 0010 | | Not Used | | 0010 | SWB | 13.2 CA-L-O5 |
| | 0011 | | Not Used | | 0011 | SWB | 13.2 CA-L-O7 |
| | 0100 | | Not Used | | 0100 | SWB | 13.2 CA-H-O2 |
| | 0101 | FB | 16.4 | | 0101 | SWB | 13.2 CA-H-O3 |
| | 0110 | FB | 24.4 | | 0110 | SWB | 13.2 CA-H-O5 |
| | 0111 | FB | 32 | | 0111 | SWB | 13.2 CA-H-O7 |
| | 1000 | FB | 48 | | 1000 | | Not Used |
| | 1001 | FB | 64 | | 1001 | | Not Used |
| | 1010 | FB | 94 | | 1010 | | Not Used |
| | 1011 | FB | 128 | | 1011 | | Not Used |
| | 1100 | | Not Used | | 1100 | | Not Used |
| | 1101 | | Not Used | | 1101 | | Not Used |
| | 1110 | | Not Used | | 1110 | | Not Used |
| | 1111 | | Not Used | | 1111 | | Not Used |
| 101 | 0000 | WB | 13.2 CA-L-O2 | 111 | 0000 | | Reserved |
| | 0001 | WB | 13.2 CA-L-O3 | | 0001 | | Reserved |
| | 0010 | WB | 13.2 CA-L-O5 | | 0010 | | Reserved |
| | 0011 | WB | 13.2 CA-L-O7 | | 0011 | | Reserved |
| | 0100 | WB | 13.2 CA-H-O2 | | 0100 | | Reserved |
| | 0101 | WB | 13.2 CA-H-O3 | | 0101 | | Reserved |
| | 0110 | WB | 13.2 CA-H-O5 | | 0110 | | Reserved |
| | 0111 | WB | 13.2 CA-H-O7 | | 0111 | | Reserved |
| | 1000 | | Not Used | | 1000 | | Reserved |
| | 1001 | | Not Used | | 1001 | | Reserved |
| | 1010 | | Not Used | | 1010 | | Reserved |
| | 1011 | | Not Used | | 1011 | | Reserved |
| | 1100 | | Not Used | | 1100 | | Reserved |
| | 1101 | | Not Used | | 1101 | | Reserved |
| | 1110 | | Not Used | | 1110 | | Reserved |
| | 1111 | | Not Used | | 1111 | | Reserved |

FIG 4g

(Art Antérieur)

| 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 | 7 |
|---|---|---|---|---|---|---|---|---|---|---|---|---|---|---|---|---|---|---|---|---|---|---|---|---|---|---|---|---|---|---|---|
| V | P | subtype | | | | | | PT=204 | | | | | | | | length | | | | | | | | | | | | | | | |
| SSRC/CSRC | | | | | | | | | | | | | | | | | | | | | | | | | | | | | | | |
| Name (ASCII) = "3GM7" | | | | | | | | | | | | | | | | | | | | | | | | | | | | | | | |
| Application dep . data | | | | | | | | | | | | | | | | | | | | | | | | | | | | | | | |

| 0010 | DATA |
|------|------|

RTCP_APP_REQ_AGG

| 0001 | DATA |
|------|------|

RTCP_APP_REQ_RED

FIG 5a

| 0 | 1 | 2 | 3 | 4 | 5 | 6 | 7 |
|---|---|---|---|---|---|---|---|
| ID | | | | X | X | X | X | X | X |

FIG 5b

(Art Antérieur)

EP 3 692 696 B1

config.
SDP — 600

config.
SDP — 650

A

B

101

152

601

653

EMT

RCP

606

657

655

Cod.
Req.A

Dec.
Req.A

Détermin.
Req.B

605

607

656

Détermin.
Req.A

Dec.
Req.B

Cod.
Req.B

102

RCP

EMT

151

603

651

Fig.6

EP 3 692 696 B1

Fig.7

RTP header

| V=2 | P | X | CC | M | PT | Sequence number (SN) |

Timestamp (TS)

SSRC

CSRC

| ext. CMR | ToC | Speech data (SD) |

Fig.8

EP 3 692 696 B1

EP 3 692 696 B1

RTP header

| V=2 | (P=1) | X | CC | M | PT | Sequence number (SN) |

Timestamp (TS)

SSRC

CSRC

| CMR | ToC | Speech data (SD) | PAD. (Req.) |

Fig.9

Fig.10

Fig..11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010232297 A

- US 2007183323 A

**Littérature non-brevet citée dans la description**

- **QUALCOMM INCORPORATED.** *eVoLP: MTSI Adaptation and Capabilities Parameters,* 22 Juin 2017, vol. SA WG4 (Sophia

- **G. CARLUCCI et al.** Analysis and Design of the Google Congestion Control for Web Real-time Communication (WebRTC). *Proc. MMSys,* Mai 2016
- *GSMA IR.92 V11.0,* 15 Juin 2017